# EUROPEAN PATENT APPLICATION

(11) **EP 3 722 198 A1**
(43) Date of publication of application: **14.10.2020**
(21) Application number: 19741101.0
(22) Date of filing: 16.01.2019
(51) Int. Cl.: B63B 35/34, B63B 35/44, B63B 5/24, B63B 9/06, B29C 48/275, B29C 48/49, B29C 48/025

(54) **METHOD FOR MANUFACTURING A LARGE-SIZED PONTOON BLOCK (EMBODIMENTS) AND LARGE-SIZED PONTOON BLOCK (EMBODIMENTS)**

(30) Priority: 17.01.2018 UA 201800498 U; 17.01.2018 UA 201800499 U; 08.10.2018 UA 201809993 U; 08.10.2018 UA 201809994 U
(71) Applicant: Cherniavskyi, Valentyn Feodosevych, Kiyv, 04086 (UA)
(72) Inventor: Cherniavskyi, Valentyn Feodosevych, Kiyv, 04086 (UA)
(74) Representative: Lapienis, Juozas
(86) International application number: PCT/UA2019/000008
(87) International publication number: WO 2019/143311

(57) **Abstract**

Methods for manufacturing floating pontoon blocks, and pontoon blocks produced using such methods are claimed. According to the above-mentioned methods, a polymer raw material is extruded with the aid of an extruder (2), the raw material being recycled polyethylene, a product of refuse recycling. In the methods, vacuum stabilisation and cooling is carried out following extrusion, then the finished section of the product is stretched with the aid of stretching devices (7) and the finished section is cut up into pieces of the required size and shape using saws (8), after which the manufacturing holes are sealed. Several extruders positioned in parallel and joined by a common head unit can be used. Extruders with several head units can be used. Virgin polyethylene can be added to the recycled polyethylene.

## Description

### Field of the Invention

The present technical solution relates to hydraulic engineering construction and, more particularly, to the methods of manufacturing pontoons, pontoon units, and pontoons that can be used as a multi-purpose floating structure, in particular, for the construction of floating hotels, wharfs, summer cottages, offices and other structures, as a floating dock pontoon, as well as a stand-alone floating object.

### Background of the Invention

A method of manufacturing a metal-plastic synthetic demountable pontoon for a vertical cylindrical tank with easily volatile liquid is known; it implies the formation of a pontoon mat comprising two layers (bottom and top) of rectangular plates made of rigid synthetic material, which are placed on a pre-installed mounting base inside the tank, while mutual edge fixation of the plates in each layer is ensured by an adhesive formulation. In accordance with the known method, the plates of the bottom and top layers of the mat are stacked on top of each other in a checkerboard pattern and are interconnected by metal strips over plate joint and pins, so that the strips form a closed loop, where two opposite strips are on the same side of the pontoon (two at the top and two at the bottom) and fastened together with pins (bottom-upwards), after which a peripheral stiffening ring is mounted along the external perimeter of the pontoon mat, consisting of the plates of rigid synthetic material, which are bonded together at the edges with an adhesive formulation and attached to the pontoon mat with pins passing through the entire thickness of the pontoon mat; thereafter, a sealing shutter is mounted on the peripheral stiffening ring along the perimeter of the mat, consisting of the blocks of formed flexible polyurethane foam, which are bonded together at the edges with an adhesive formulation and pinned through the entire thickness of the mat (the pins are inserted in restricting tubes). Then the sealing shutter is pressed against the pontoon with overlapping metal strips and pins to form a ring, wherein the ring strips evenly press the sealing shutter to the pontoon and are electrically connected to the grounding circuit of the pontoon (Ukrainian Patent No. 76213). This method of pontoon production is non-technological and complex. This method does not allow manufacturing continuous pontoon units of very large size. This method does not allow manufacturing pontoon units that can be used as a multi-purpose floating structure, in particular, for the construction of floating hotels, wharfs, summer cottages, offices and other structures, as a pontoon of a floating dock, as well as a stand-alone floating object.

Known is a pontoon comprising a body made in the form of a rectangular parallelepiped, the vertical edges of which are evenly aligned to each of the faces, and are represented by additional faces with the eyelets, while the eyelets located on the left side are at the same level, and the eyelets opposite to them on the right side are located in such a way that their upper or bottom base is at the level of the bottom or upper, respectively, base of the opposite eyelets (Ukrainian Patent No. 2760). This pontoon is small in size and does not allow covering large water surfaces. This pontoon is heavy, that is why its buoyancy is not sufficient.

### Brief Description of the Figures

The essence of the technical solution embodiments is explained by the following figures, which in no way limit the possibility of embodiment of the claimed solution alternatives. There are also other technical solution embodiments to the extent disclosed in the formula. These figures explain the essence of the technical solution embodiments using a conditional material object with the features included in the formula. The figures show the preferred technical solution embodiments.

A professional in the field, to which the technical solution relates, understands that the alternative technical solution embodiments shown in the figures are not final and may be modified or improved.

According to the technical solution embodiments listed below, the figures show the following:

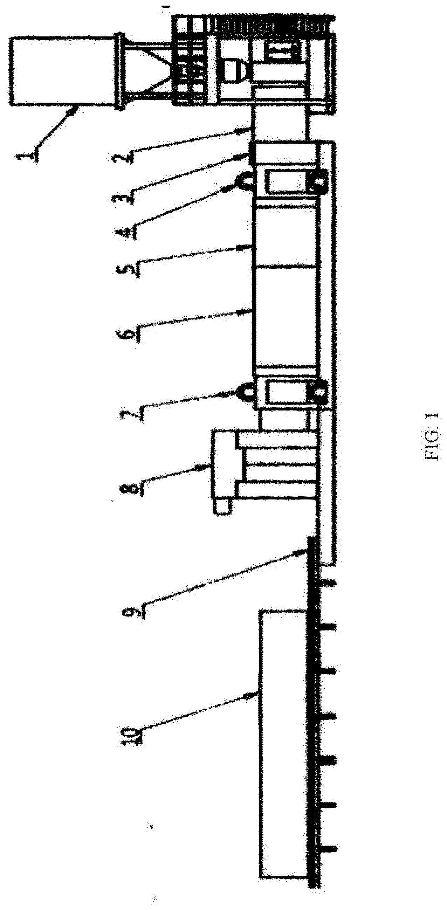

Fig. 1 is a schematic view of a process line for the proposed technical solution embodiments, which comprises a hopper (1), an extruder (2), an extrusion die (3), a vacuum stabilizer (4), a cutter (5), a cooling system (6), a haul-off (7), a dividing saw (8), a roller conveyor (9), an end product (10);

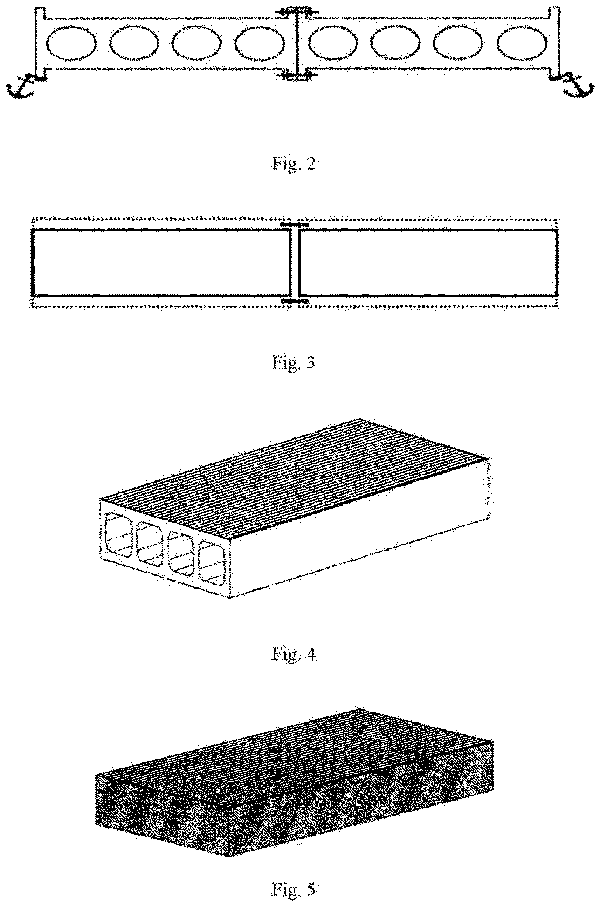

Fig. 2 shows the interconnection of pontoons, fastening of anchor cables;
Fig. 3 shows the interconnection of pontoons, fastening of ropes;
Fig. 4 shows the profile of a pontoon with access holes;
Fig. 5 shows a continuous profile of the pontoon (without access holes);

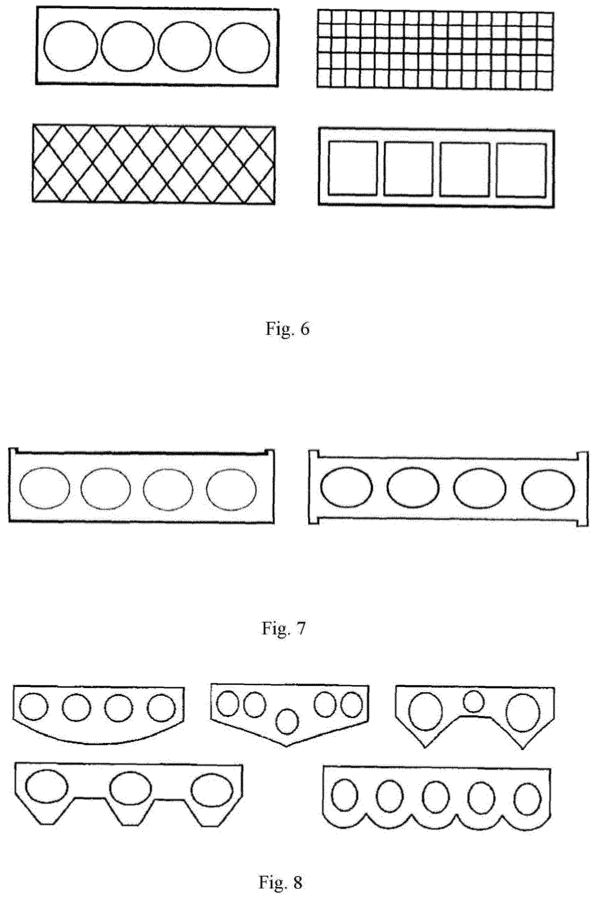

Fig. 6 shows the internal access holes of the pontoon;
Fig. 7 shows the shape of the upper section of the pontoon;
Fig. 8 shows the shape of the bottom section of the pontoon.

### Disclosure of the Invention

The objective of the claimed technical solution is to improve the method of pontoon production in order to obtain a solid pontoon unit of a very large size, as well as to improve the method of pontoon production in order to obtain a higher-quality and more technological end product-a pontoon unit with improved buoyancy.

One more objective underlying the present technical solution is to improve the pontoon unit and to create a pontoon unit of a large size to cover large water surfaces.

One more objective underlying the present technical solution is to improve the pontoon unit in order to obtain a higher-quality and more technological pontoon unit for the purpose of producing a pontoon unit with improved buoyancy.

The integrity of the inventive concept for the proposed group of technical solutions is due to the presence of a common feature inherent in each of the objects, namely, the use of a waste processing product-recycled polyethylene-as a raw material.

In accordance with one of the aspects of the technical solution, at the least, the objectives set are achieved due to the method of manufacturing a floating pontoon unit of a large size, which implies the extrusion of the polymer raw material, while the raw material is a waste processing product-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100-300 degrees Celsius.

If necessary, additives suitable for extrusion enhancement are used. Admixtures and/or plasticizers are used as additives suitable for enhancing extrusion.

If necessary, dyes are added to the mixture of raw materials to acquire the colour of the end product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained based on the proposed technical solution embodiment are welded or fused with sheet-like polymer plates of different thickness.

If necessary, before sealing the end product, pontoon unit, or pontoon manufactured based on the proposed technical solution embodiment, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

An alternative embodiment of the technical solution is possible, wherein the extrusion process line comprises a single extruder.

An alternative embodiment of the technical solution is possible, wherein the process line comprises a single extruder with several dies.

An alternative embodiment of the technical solution is possible, wherein the extrusion process line comprises several extruders operating simultaneously, whereby they are arranged in parallel in the process line, and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed technical solution embodiment, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the second aspect of the technical solution, at the least, the objectives set are achieved by the method of manufacturing a floating pontoon unit of a large size, according to which polymer raw materials are extruded, wherein the raw material is a waste processing product-recycled polyethylene, and the number of extruders exceeds one.

Thus, according to the second aspect of the technical solution, a so-called set of extruders is used.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100-300 degrees Celsius.

If necessary, additives suitable for extrusion enhancement are used. Admixtures and/or plasticizers are used as additives suitable for enhancing extrusion.

If necessary, dyes are added to the mixture of raw materials to acquire the colour of the end product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed technical solution embodiment, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed technical solution embodiment, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by the method proposed by the present technical solution for manufacturing a floating pontoon unit of a large size, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and the access holes are sealed, wherein the raw material is the waste processing product-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100-300 degrees Celsius,

If necessary, additives suitable for extrusion enhancement are used. Admixtures and/or plasticizers are used as additives suitable for enhancing extrusion.

If necessary, dyes are added to the mixture of raw materials to acquire the colour of the end product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed technical solution embodiment, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

An alternative embodiment of the technical solution is possible, wherein the extrusion process line comprises a single extruder.

An alternative embodiment of the technical solution is possible, wherein the process line comprises a single extruder with several dies.

An alternative embodiment of the technical solution is possible, wherein the extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed technical solution embodiment, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by the method proposed by the present technical solution for manufacturing a floating pontoon unit of a large size, according to which polymer raw materials are extruded, additives are added to polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is the waste processing product-recycled polyethylene, and the number of extruders exceeds one.

Thus, according to this aspect of the technical solution, a so-called set of extruders is used.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100-300 degrees Celsius.

If necessary, additives suitable for extrusion enhancement are used. Admixtures and/or plasticizers are used as additives suitable for enhancing extrusion.

If necessary, dyes are added to the mixture of raw materials to acquire the colour of the end product.

Extrusion is followed by vacuum stabilization and cooling.

Next, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed technical solution embodiment, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed technical solution embodiment, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by means of the pontoon unit of a large size proposed by the present technical solution, which comprises the body, upper section and edges, while the pontoon unit is made of polymer raw materials-a waste processing product-recycled polyethylene.

According to the proposed technical solution embodiment, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

In accordance with the following aspect of the technical solution, at the least, the objectives are achieved by means of the pontoon unit of a large size proposed by the present technical solution, which comprises a body, upper section and edges, while the pontoon unit is made by extrusion of polymer raw materials, wherein raw materials are waste processing products-recycled polyethylene.

According to the proposed technical solution embodiment, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene can be used in the form of granules, powder, or tapes.

In accordance with the following aspect of the technical solution, at the least, the objectives set are achieved by means of the pontoon unit of a large size proposed by the present technical solution, which comprises a body, upper section and edges, while the pontoon unit is made of polymer raw materials-waste processing products-recycled polyethylene, by the method suggesting the extrusion of polymer raw materials, and the number of extruders arranged in parallel exceeds one (a so-called set of extruders).

According to the proposed technical solution embodiment, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the pontoon unit of a large size proposed by the present technical solution, which comprises a body, upper section and edges, while the pontoon unit is made of polymer raw materials by the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and the access holes are sealed, wherein the raw material is a waste processing product-recycled polyethylene.

According to the proposed technical solution embodiment, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the pontoon unit of a large size proposed by the present technical solution, which comprises a body, upper section and edges, while the pontoon unit is made of polymer raw materials by the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and the access holes are sealed, wherein the raw material is a waste processing product-recycled polyethylene, and the number of extruders arranged in parallel exceeds one (a so-called set of extruders).

According to the proposed technical solution embodiment, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the method of manufacturing a pontoon unit of a large size proposed by the present technical solution, according to which the polymer raw material is extruded, wherein the raw material is a waste processing product-recycled polyethylene with the addition of initial polyethylene.

The waste processing products include the recycled grade HDPE polyethylene (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100 to 250 degrees Celsius.

If necessary, additives suitable for extrusion enhancement are used. Admixtures and/or plasticizers are used as additives suitable for enhancing extrusion.

If necessary, dyes are added to the mixture of raw materials to acquire the colour of the end product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained based on the proposed technical solution embodiment are welded or fused with sheet-like polymer plates of different thickness.

If necessary, before sealing the end product, pontoon unit, or pontoon manufactured based on the proposed technical solution embodiment, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

An alternative embodiment of the technical solution is possible, wherein the extrusion process line comprises a single extruder.

An alternative embodiment of the technical solution is possible, wherein the process line comprises a single extruder with several dies.

An alternative embodiment of the technical solution is possible, wherein the extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach 10 or more extruders.

According to the proposed technical solution embodiment, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by means of the method of manufacturing a pontoon unit of a large size proposed by the present technical solution, according to which the polymer raw material is extruded, wherein the raw material is a waste processing product-recycled polyethylene with the addition of initial polyethylene, and the number of extruders can be more than one.

Thus, according to this aspect of the technical solution, a so-called set of extruders is used.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100 to 250 degrees Celsius.

If necessary, additives suitable for extrusion enhancement are used. Admixtures and/or plasticizers are used as additives suitable for enhancing extrusion.

If necessary, dyes are added to the mixture of raw materials to acquire the colour of the end product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed technical solution embodiment, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed technical solution embodiment, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by the method proposed by the present technical solution for manufacturing a floating pontoon unit of a large size, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene with the addition of initial polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100 to 250 degrees Celsius.

If necessary, additives suitable for extrusion enhancement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed technical solution embodiment, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

An alternative embodiment of the technical solution is possible, wherein the extrusion process line comprises a single extruder.

An alternative embodiment of the technical solution is possible, wherein the process line comprises a single extruder with several dies.

An alternative embodiment of the technical solution is possible, wherein the extrusion process line comprises several extruders operating simultaneously, whereby they are arranged in parallel in the process line and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed technical solution embodiment, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by the method proposed by the present technical solution for manufacturing a floating pontoon unit of a large size, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene with the addition of initial polyethylene, the extruders are arranged in parallel in the process line and their number exceeds one.

Waste processing products include recycled polyethylene of grades HDPE, and/or MDPE, and/or LDPE, and/or LLDPE, and/or PEX, and/or PP, and/or CSPE, and/or UHMWPE, and/or their mixtures.

Recycled polyethylene is presented in the form of granules and/or powder and/or tapes.

Extrusion is carried out at a temperature of 100 to 250 degrees Celsius.

If necessary, additives suitable for extrusion enhancement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

### 3-8

In accordance with the following aspect of the technical solution, the objectives set are achieved by the method proposed by the present technical solution for manufacturing a floating pontoon unit of a large size, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product- recycled polyethylene with the addition of initial polyethylene; the extruders are arranged in parallel in the process line and their number exceeds one, more preferably, from 5 to 6.

Thus, according to the eleventh aspect of the technical solution, a so-called set of extruders is used.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100 to 250 degrees Celsius.

If necessary, additives suitable for extrusion enhancement are used. Admixtures and/or plasticizers are used as additives suitable for enhancing extrusion.

If necessary, dyes are added to the mixture of raw materials to acquire the colour of the end product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

An alternative embodiment of the technical solution is possible, wherein the extrusion process line comprises a single extruder.

An alternative embodiment of the technical solution is possible, wherein the process line comprises a single extruder with several dies.

An alternative embodiment of the technical solution is possible, wherein the extrusion process line comprises several extruders operating simultaneously, whereby they are arranged in parallel in the process line and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, the objectives set are achieved by means of the pontoon unit of a large size proposed by the present technical solution which comprises a body with the upper and bottom sections and edges made of waste processing products-recycled polyethylene with the addition of initial polyethylene.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste. processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the large pontoon unit proposed by the technical solution, which comprises a body with the upper and bottom sections and edges manufactured using the method suggesting the extrusion of polymer raw materials, wherein raw materials are waste processing products-recycled polyethylene with the addition of initial polyethylene.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the pontoon unit of a large size proposed by the technical solution, which comprises a body with the upper and bottom sections and edges manufactured using the method suggesting the extrusion of polymer raw materials, wherein the raw materials are waste processing products-recycled polyethylene with the addition of initial polyethylene, and the number of extruders exceeds one.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include, in particular, recycled polyethylene of grades HDPE, MDPE, LDPE, LLDPE, PEX, PP, CSPE, UHMWPE, and their mixtures. Recycled polyethylene can be used in the form of granules, powder, or tapes.

In accordance with the following aspect of the technical solution, at the least, the objectives set are achieved by means of the pontoon unit of a large size proposed by the present technical solution, which comprises a body with the upper section, bottom section and edges manufactured by the method, according to which polymer raw materials are extruded, additives are added to polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene with the addition of initial polyethylene.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without sides.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include, in particular, recycled polyethylene of grades HDPE, MDPE, LDPE, LLDPE, PEX, PP, CSPE, UHMWPE, and their mixtures. Recycled polyethylene can be used in the form of granules, powder, or tapes.

In accordance with the following aspect of the technical solution, at the least, the objectives set are achieved by means of the pontoon unit of a large size proposed by the present technical solution, which comprises a body with the upper section, bottom section and edges manufactured by the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene with the addition of initial polyethylene, and the extruders are arranged in parallel in the process line and their number exceeds one.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the pontoon unit of a large size proposed by the present technical solution, comprising a body with the upper section, bottom section and edges manufactured by the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene with the addition of initial polyethylene, and the extruders are arranged in parallel in the process line and their number exceeds one, preferably, from 5 to 6.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

The waste processing products include the recycled grade HDPE polyethylene (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the method of manufacturing the pontoon unit of a large size proposed by the present technical solution, according to which the polymer raw material is extruded, wherein the raw material is a waste processing product-recycled polyethylene, and the extrusion involves an extruder with several dies.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100-300 degrees Celsius.

If necessary, additives suitable for extrusion enhancement are used. Admixtures and/or plasticizers are used as additives suitable for enhancing extrusion.

If necessary, dyes are added to the mixture of raw materials to acquire the colour of the end product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

An alternative embodiment of the technical solution is possible, wherein the extrusion process line comprises a single extruder.

An alternative embodiment of the technical solution is possible, wherein the extrusion process line comprises several extruders operating simultaneously, whereby they are arranged in parallel in the process line and their number exceeds one (a so-called set of extruders). There can be two extruders in the process line. There can be two or more extruders in the process line. There can be three extruders in the process line. There can be four extruders in the process line. There can be five extruders in the process line. There can be six extrudersin the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by the method proposed by the present technical solution for manufacturing a pontoon unit of a large size, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene, and the extrusion involves an extruder with several dies.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100-300 degrees Celsius.

If necessary, additives suitable for extrusion enhancement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

An alternative embodiment of the technical solution is possible, wherein the extrusion process line comprises a single extruder.

An alternative embodiment of the technical solution is possible, wherein the extrusion process line comprises several extruders operating simultaneously, whereby they are arranged in parallel in the process line and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, the objectives set are achieved by the method proposed by the present technical solution for manufacturing a pontoon unit of a large size, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene, and the extrusion involves the extruder with several dies, while the extruders are arranged in parallel in the process line, and their number exceeds one.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100-300 degrees Celsius.

If necessary, additives suitable for extrusion enhancement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Next, the finished product profile is pulled along the process line using haul-offs, and the finished product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by means of the pontoon unit of a large size proposed by the technical solution, comprising a body with the upper and bottom sections and edges manufactured using the method suggesting the extrusion of polymer raw materials, wherein the raw material is waste processing products-recycled polyethylene, and the extrusion involves an extruder with several dies.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the pontoon unit of a large size proposed by the present technical solution, comprising a body with the upper section, bottom section and edges manufactured by the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and the access holes are sealed, wherein the raw material is a waste processing product -recycled polyethylene, and the extrusion involves an extruder with several dies.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene can be used in the form of granules, powder, or tapes.

In accordance with the following aspect of the technical solution, at the least, the objectives set are achieved by means of the pontoon unit of a large size proposed by the present technical solution, comprising a body with the upper section, bottom section and edges manufactured by the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene, and the extrusion involves an extruder with several dies, while the extruders are arranged in parallel in the process line and their number exceeds one.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the method of manufacturing a floating pontoon unit of a large size proposed by the present technical solution, according to which the polymer raw material is extruded, wherein the raw material is a waste processing product-recycled polyethylene with the addition of initial polyethylene, and the extrusion involves an extruder with several dies.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100 to 250 degrees Celsius.

If necessary, additives suitable for extrusion enhancement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

An alternative embodiment of the technical solution is possible, wherein the extrusion process line comprises a single extruder.

An alternative embodiment of the technical solution is possible, wherein the extrusion process line comprises several extruders operating simultaneously, whereby they are arranged in parallel in the process line and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by the method proposed by the present technical solution for manufacturing a pontoon unit of a large size, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, access holes are sealed, wherein the raw material is a waste processing product-recycled polyethylene with the addition of initial polyethylene, and the extrusion involves an extruder with several dies.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100 to 250 degrees Celsius.

If necessary, additives suitable for extrusion enhancement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

An alternative embodiment of the technical solution is possible, wherein the extrusion process line comprises a single extruder.

An alternative embodiment of the technical solution is possible, wherein the extrusion process line comprises several extruders operating simultaneously, whereby they are arranged in parallel in the process line and their number exceeds one (a so-called set of extruders). There can be two extruders in the process line, There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by the method proposed by the present technical solution for manufacturing a pontoon unit of a large size, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, access holes are sealed, wherein the raw material is a waste processing product-recycled polyethylene with the addition of initial polyethylene, and the extrusion involves an extruder with several dies, while the extruders are arranged in parallel in the process line, and their number exceeds one.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100 to 250 degrees Celsius.

If necessary, additives suitable for extrusion enhancement are used. Admixtures and/or plasticizers are used as additives suitable for enhancing extrusion.

If necessary, dyes are added to the mixture of raw materials to acquire the colour of the end product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by means of the pontoon unit of a large size proposed by the technical solution, containing a body with the upper and bottom sections and edges manufactured using the method suggesting the extrusion of polymer raw materials, wherein the raw material is waste processing products-recycled polyethylene with the addition of initial polyethylene, and the extrusion involves an extruder with several dies.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the pontoon unit of a large size proposed by the present technical solution, containing a body with the upper section, bottom section and edges manufactured by the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and the access holes are sealed, wherein the raw material is a waste processing product-recycled polyethylene with the addition of initial polyethylene, and the extrusion involves an extruder with several dies.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the pontoon unit of a large size proposed by the present technical solution, which comprises a body with upper and bottom sections and edges, produced using the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene with the addition of initial polyethylene, while the extrusion involves an extruder with several dies, and the number of extruders arranged in parallel exceeds one.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the method of manufacturing a pontoon unit of a large size proposed by the present technical solution, according to which the polymer raw material is extruded, wherein the raw material is a waste processing product-recycled polyethylene, and the extrusion involves the extruders with a common single die, while the number of extruders exceeds one.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100-300 degrees Celsius.

If necessary, the additives intended for extrusion improvement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by the method proposed by the present technical solution for manufacturing a pontoon unit of a large size, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, and access holes are sealed, wherein the raw material is a waste processing product-recycled polyethylene, and the extrusion involves the extruders with a common single die, and the number of extruders exceeds one.

According to the proposed alternative of the technical solution, pontoon units of the following dimensions are mainly (but not exclusively) obtained: 3 and more meters wide, 1 and more meters high, 5 and more meters long.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100-300 degrees Celsius.

If necessary, the additives intended for extrusion improvement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel in the process line and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by means of the pontoon unit of a large size proposed by the technical solution, it comprises a body with the upper and bottom sections and edges manufactured using the method suggesting the extrusion of polymer raw materials, where raw material is waste processing products (recycled polyethylene), and the extrusion involves the extruders with a common single die, while the number of extruders exceeds one.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the pontoon unit of a large size proposed by the present technical solution, which comprises a body with the upper section, bottom section and edges manufactured by the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, access holes are sealed, wherein the raw material is a waste processing product (recycled polyethylene), and the extrusion involves the extruders with a common single die, and the number of extruders exceeds one.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the method of manufacturing a pontoon unit of a large size proposed by the present technical solution, according to which the polymer raw material is extruded, wherein the raw material is a waste processing product-recycled polyethylene with the addition of initial polyethylene, and the extrusion involves the extruders with a common single die, while the number of extruders exceeds one.

The waste processing products include the recycled grade HDPE polyethylene (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100 to 250 degrees Celsius.

If necessary, the additives intended for extrusion improvement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit or pontoon produced by the method proposed by the technical solution has temporary openings, then these openings are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by the method proposed by the present technical solution for manufacturing a pontoon unit of a large size, according to which polymer raw materials are extruded, additives are added to the polymer raw materials to enhance the extrusion, followed by vacuum stabilization and cooling, the product finished profile is pulled along the process line using haul-offs, and the end product is cut using longitudinal and/or cross-sectional saws into pieces of the required size and shape, access holes are sealed, wherein the raw material is a waste processing product-recycled polyethylene with the addition of initial polyethylene, and the extrusion involves the extruders with a common single die, and the number of extruders exceeds one.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

Recycled polyethylene is presented in the form of granules and/or powder and/or tapes.

Extrusion is carried out at a temperature of 100 to 250 degrees Celsius.

If necessary, the additives intended for extrusion improvement are used. Admixtures and/or plasticizers are used as additives suitable for enhancing extrusion.

If necessary, the dyes are added to the mixture of raw materials to acquire the colour of the final product.

Extrusion is followed by vacuum stabilization and cooling.

Thereafter, the product finished profile is pulled along the process line using haul-offs, and the end product is cut with longitudinal and/or cross-sectional saws into pieces of the required size and shape.

If necessary, if the end product, pontoon unit, or pontoon produced by the method proposed by the technical solution has access holes, then these access holes are sealed. Access holes are sealed by filling, either completely or partially, with water-resistant foam.

Water-resistant foam includes a sealing, polystyrene or other water-resistant foam.

If necessary, the edges of the end product, pontoon unit, or pontoon obtained according to the proposed technical solution embodiment are welded or fused with sheet-like polymer plates of different thickness.

If necessary, before sealing the end product, pontoon unit, or pontoon manufactured based on the proposed alternative of the technical solution, tanks for drinking water, products, and equipment are mounted in the access holes.

If necessary, treatment plants for the treatment of wastewater and other flows are mounted into the access holes.

If required, to access these tanks, vertical holes are cut in the upper section of the pontoon for laying pipelines and electrical networks.

The extrusion process line comprises several extruders operating simultaneously, whereby they are arranged in parallel and their number exceeds one (a so-called set of extruders). There can be two extruders in the process line. There can be two or more extruders in the process line. There can be three extruders in the process line. There can be four extruders in the process line. There can be five extruders in the process line. There can be six extruders in the process line. The number of extruders in the process line can exceed six and reach ten or more extruders.

According to the proposed alternative of the technical solution, pontoon units of the following dimensions are mainly (but not exclusively) obtained: 3 and more meters wide, 1 and more meters high, 5 and more meters long.

The pontoon unit manufactured based on the proposed technical solution embodiment has a large margin of buoyancy.

This pontoon production method is technological and more advanced. This method allows manufacturing solid pontoon units of a very large size and good buoyancy.

In accordance with the following aspect of the technical solution, at the least, the objectives set are achieved by means of the pontoon unit of a large size proposed by the technical solution, it comprises a body with the upper and bottom sections and edges manufactured using the method suggesting the extrusion of polymer raw materials, wherein raw materials are waste processing products -- recycled polyethylene with the addition of initial polyethylene, and the extrusion involves the extruders with a common single die, and the number of extruders exceeds one.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

In accordance with the following aspect of the technical solution, at the least, the objectives set are achieved by means of the pontoon unit of a large size proposed by the present technical solution, which comprises a body with the upper section, bottom section and edges manufactured by the method, according to which polymer raw materials are extruded, additives are added to the polymer raw materials to enhance the extrusion, followed by vacuum stabilization and cooling; the product finished profile is pulled along the process line using haul-offs, and the end product is cut using longitudinal and/or cross-sectional saws into pieces of the required size and shape, access holes are sealed, wherein the raw material is a waste processing product-recycled polyethylene [of a recycled polyethylene] with the addition of initial polyethylene, and the extrusion involves the extruders with a common single die, and the number of extruders exceeds one.

According to the proposed alternative of the technical solution, pontoon units of the following dimensions are mainly (but not exclusively) obtained: 3 and more meters wide, 1 and more meters high, 5 and more meters long.

The product edges can be welded (fused) with sheet-like polymer plates of different thickness.

The proposed pontoon unit can have a continuous profile (without access holes) or a profile with access holes. The holes are designed for installation of tanks for drinking water, products, equipment, treatment plants for waste water and other flows, for laying pipelines and electrical networks. The upper section of the pontoon unit can be flat or with flanges of different heights, smooth or with notches of different depths and widths. The bottom section of the product can be of various shapes: flat, semicircular, triangular, catamaran, trimaran, etc., with or without flanges.

Due to the use of waste processing products (recycled polyethylene) as a raw material for the pontoon and the use of the extrusion process line, the production of the end product of a very large size is achieved.

The proposed pontoon unit contains the upper and bottom sections and edges, and is characterized by the use in its production of polymer raw materials-waste processing products-recycled polyethylene.

Waste processing products include recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures. Recycled polyethylene can be used in the form of granules, powder, or tapes.

It should be obvious that the detailed description provided is not intended to limit the claimed solution to the given individual embodiments, but rather includes all modifications, equivalents and alternatives that fall within the scope of patent protection defined by the formula of the claimed technical solution.

### The Best Invention Embodiments

The embodiments of the present technical solution listed below are not intended to limit the scope of legal protection, but are rather used to explain the essence of the present technical solution.

### Example 1.

The pontoon unit is manufactured with the use of waste processing products, particularly from recycled grade HDPE polyethylene granules (recycled high-density polyethylene) and/or MDPE (recycled medium-density polyethylene) and/or LDPE recycled low-density polyethylene), and/or LLDPE (linear low density polyethylene), and/or PEX (cross linked polyethylene), and/or PP (polypropylene), and/or CSPE(chlorosulfonated polyethylene), and/or UHMWPE (ultra-high molecular weight polyethylene), and/or their mixtures. To add colour to the product, dyes are added to the mixture.

The mixture melting point is 100 to 300 degrees Celsius.

The initial polymer raw material (in the form of granules, powder, tapes, etc.) is fed into the hopper of the extrusion line. Various additives, plasticizers and dyes are also added to the hopper. From the hopper, raw materials are fed to the extruder using an extrusion or belt (or other) loading line to force feed the material from the hopper to the extruder screw. While in the extruder, the polymer material is melted, plasticized, and then pumped into the moulding die. Extrusion is carried out at a temperature of 100-300 degrees Celsius.

Screw, multi-screw, disk, or screwless extruders, or their combinations are used.

The extruder die may have various access holes that form the product's internal access holes.

An alternative embodiment of the technical solution is possible, wherein an extruder with multiple dies is used.

From the moulding die, the product is fed into a vacuum stabilizer for stabilisation of the external surfaces and internal access holes.

After the product is stabilized, a longitudinal or transverse notch of various depths and widths can be applied on its surface (depending on the customer's needs).

To fully stabilize the product, it is fed into a cooling chamber, where it is cooled with water, cold air, or with any other method. One or more haul-offs ensure continuous product flow along the process line.

Depending on the needs, the finished profile is cut with a cross-sectional and/or longitudinal saw into pieces of the required size and shape.

After cutting, the profile pieces are fed to the access hole sealing unit by filling the holes completely or partially with sealing, polystyrene or other water-resistant foam.

The product edges can be welded (fused) with sheet-like polymer plates of different thickness. Prior to complete sealing, tanks for drinking water, food, equipment, etc. may be mounted into the access holes.

In the case when pontoons are used for residential purposes, treatment plants for the treatment of wastewater and other flows are mounted into the access holes.

To access these tanks, vertical holes are cut in the upper section of the pontoon for laying pipelines and electrical networks.

To mount facilities or enclosures on the pontoon, access holes of various depths and diameters are drilled in the pontoon array to mount embedded metal parts, or without them. These holes are used for connecting pontoons to each other and for anchoring cables and ropes.

The pontoons or pontoon units made according to the method described in Example 1 represent the pontoons (pontoon units) of a large size, which is due to the number of extruders used, and they can have a continuous profile (without access holes) or a profile with access holes.

The upper section of pontoons or pontoon units made according to the method described in Example 1 can be flat (or with flanges of different heights), smooth, or with notches of different depths and widths. The bottom section of pontoons or pontoon units made according to the method described in Example 1 can be of various shapes: semicircular, triangular, catamaran, trimaran, etc.

According to the method described in Example 1, pontoon units of the following dimensions are mainly (but not exclusively) obtained: 3 and more meters wide, 1 and more meters high, 5 and more meters long.

Pontoons or pontoon units made according to the method described in Example 1 have a large margin of buoyancy.

The method described in Example 1 is technological and more advanced.

As we can see, the method described in Example 1 makes it possible to obtain solid pontoon units of a very large size with good buoyancy.

### Example 2.

The pontoon unit is manufactured with the use of waste processing products, particularly from recycled grade HDPE polyethylene granules (recycled high-density polyethylene) and/or MDPE (recycled medium-density polyethylene) and/or LDPE recycled low-density polyethylene), and/or LLDPE (linear low density polyethylene), and/or PEX (cross linked polyethylene), and/or PP (polypropylene), and/or CSPE(chlorosulfonated polyethylene), and/or UHMWPE (ultra-high molecular weight polyethylene), and/or their mixtures. To add colour to the product, dyes are added to the mixture.

The mixture melting point is 100 to 300 degrees Celsius.

The initial polymer raw material (in the form of granules, powder, tapes, etc.) is fed into the hopper of the extrusion line. Various additives, plasticizers and dyes are also added to the hopper. From the hopper, raw materials are fed to the extruder using an extrusion or belt (or other) loading line to force feed the material from the hopper to the extruder screw. While in the extruder, the polymer material is melted, plasticized, and then pumped into the moulding die. Extrusion is carried out at a temperature of 100-300 degrees Celsius.

Screw, multi-screw, disk, or screwless extruders, or their combinations are used.

The extruder die may have various access holes that form the product's internal access holes.

An alternative embodiment of the technical solution is possible, wherein extruders with multiple dies are used.

An alternative embodiment of the technical solution is possible, wherein several extruders combined with a single die are used.

From the moulding die, the product is fed into a vacuum stabilizer for stabilisation of the external surfaces and internal access holes.

The so-called set of extruders operates. This set represents several parallel extruders, with their preferential number of 5 to 6. The proposed technical solution can be implemented when the number of extruders is 2, 3, 4, more than 6. Thus, the number of extruders in the process line can be 2 to 6. There can also be two extruders in the process line. There can also be three extruders in the process line. There can also be four extruders in the process line.

There can also be five extruders in the process line. There can also be six extruders in the process line. There can also be more than six extruders in the process line.

After the product is stabilized, a longitudinal or transverse notch of various depths and widths can be applied on its surface (depending on the customer's needs).

To fully stabilize the product, it is fed into a cooling chamber, where it is cooled with water, cold air, or by any other method. One or more haul-offs ensure continuous product flow along the process line.

Depending on the needs, the finished profile is cut with a cross-sectional and/or longitudinal saw into pieces of the required size and shape.

After cutting, the profile pieces are fed to the access hole sealing unit by filling the holes completely or partially with sealing, polystyrene or other water-resistant foam.

The product edges can be welded (fused) with sheet-like polymer plates of different thickness. Prior to complete sealing, tanks for drinking water, food, equipment, etc. may be mounted into the access holes.

In the case when pontoons are used for residential purposes, treatment plants for the treatment of wastewater and other flows are mounted into the access holes.

To access these tanks, vertical holes are cut in the upper section of the pontoon for laying pipelines and electrical networks.

To mount facilities or enclosures on the pontoon, access holes of various depths and diameters are drilled in the pontoon array to mount embedded metal parts, or without them. These holes are used for connecting pontoons to each other and for anchoring cables and ropes.

The pontoons or pontoon units made according to the method described in Example 1, represent the pontoons (pontoon units) of a large size, which is due to the number of extruders used, and they can have a continuous profile (without access holes) or a profile with access holes.

The upper section of pontoons or pontoon units made according to the method described in Example 2 can be flat (or with flanges of different heights), smooth, or with notches of different depths and widths. The bottom section of pontoons or pontoon units made according to the method described in Example 2 can be of various shapes: semicircular, triangular, catamaran, trimaran, etc.

According to the method described in Example 2, pontoon units of the following dimensions are mainly (but not exclusively) obtained: 3 and more meters wide, 1 and more meters high, 5 and more meters long.

Pontoons or pontoon units made according to the method described in Example 2 have a large margin of buoyancy.

The method described in Example 2 is technological and more advanced.

As we can see, the method described in Example 2 makes it possible to obtain solid pontoon units of a very large size with good buoyancy.

### Example 3.

The pontoon unit is manufactured with the use of waste processing products, particularly from recycled grade HDPE polyethylene granules (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE(chlorosulfonated polyethylene), and/or UHMWPE (ultra-high molecular weight polyethylene), and/or their mixtures with the addition of initial polyethylene.

To add colour to the product, dyes are added to the mixture.

The mixture melting point is 100 to 250 degrees Celsius.

The initial polymer raw material (in the form of granules, powder, tapes, etc.) is fed into the hopper of the extrusion line. Various additives, plasticizers and dyes are also added to the hopper. From the hopper, raw materials are fed to the extruder using an extrusion or belt (or other) loading line to force feed the material from the hopper to the extruder screw. While in the extruder, the polymer material is melted, plasticized, and then pumped into the moulding die. Extrusion is carried out at a temperature of 100 to 250 degrees Celsius.

Screw, multi-screw, disk, or screwless extruders, or their combinations are used.

The extruder die may have various access holes that form the product's internal access holes.

An alternative embodiment of the technical solution is possible, wherein an extruder with multiple dies is used.

From the moulding die, the product is fed into a vacuum stabilizer for stabilisation of the external surfaces and internal access holes.

After the product is stabilized, a longitudinal or transverse notch of various depths and widths can be applied on its surface (depending on the customer's needs).

To fully stabilize the product, it is fed into a cooling chamber, where it is cooled with water, cold air, or by any other method.

One or more haul-offs ensure continuous product flow along the process line.

Depending on the needs, the finished profile is cut with a cross-sectional and/or longitudinal saw into pieces of the required size and shape.

After cutting, the profile pieces are fed to the access hole sealing unit by filling the holes completely or partially with sealing, polystyrene or other water-resistant foam.

The product edges can be welded (fused) with sheet-like polymer plates of different thickness. Prior to complete sealing, tanks for drinking water, food, equipment, etc. may be mounted into the access holes.

In the case when pontoons are used for residential purposes, treatment plants for the treatment of wastewater and other flows are mounted into the access holes.

To access these tanks, vertical holes are cut in the upper section of the pontoon for laying pipelines and electrical networks.

To mount facilities or enclosures on the pontoon, access holes of various depths and diameters are drilled in the pontoon array to mount embedded metal parts, or without them. These holes are used for connecting pontoons to each other and for anchoring cables and ropes.

The pontoons or pontoon units made according to the method described in Example 3 represent the pontoons (pontoon units) of a large size, which is due to the number of extruders used, and they can have a continuous profile (without access holes) or a profile with access holes.

The upper section of pontoons or pontoon units made according to the method described in Example 3 can be flat (or with flanges of different heights), smooth, or with notches of different depths and widths. The bottom section of pontoons or pontoon units made according to the method described in Example 3 can be of various shapes: semicircular, triangular, catamaran, trimaran, etc.

According to the method described in Example 3, pontoon units of the following dimensions are mainly (but not exclusively) obtained: 3 and more meters wide, 1 and more meters high, 5 and more meters long.

Pontoons or pontoon units made according to the method described in Example 3 have a large margin of buoyancy.

The method described in Example 3 is technological and more advanced.

As we can see, the method described in Example 3 makes it possible to obtain solid pontoon units of a very large size with good buoyancy.

### Example 4.

The pontoon unit is manufactured with the use of waste processing products, particularly from recycled grade HDPE polyethylene granules (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE(chlorosulfonated polyethylene), and/or UHMWPE (ultra-high molecular weight polyethylene), and/or their mixtures with the addition of initial polyethylene.

To add colour to the product, dyes are added to the mixture.

The mixture melting point is 100 to 250 degrees Celsius.

The initial polymer raw material (in the form of granules, powder, tapes, etc.) is fed into the hopper of the extrusion line. Various additives, plasticizers and dyes are also added to the hopper. From the hopper, raw materials are fed to the extruder using an extrusion or belt (or other) loading line to force feed the material from the hopper to the extruder screw. While in the extruder, the polymer material is melted, plasticized, and then pumped into the moulding die. Extrusion is carried out at a temperature of 100 to 250 degrees Celsius.

Screw, multi-screw, disk, or screwless extruders, or their combinations are used.

The extruder dies may have various access holes that form the product's internal access holes.

An alternative embodiment of the technical solution is possible, wherein extruders with multiple dies are used.

An alternative embodiment of the technical solution is possible, wherein several extruders bonded together by a single die are used.

From the moulding die, the product is fed into a vacuum stabilizer for stabilisation of the external surfaces and internal access holes.

The so-called set of extruders operates, which represents several parallel extruders, with their preferential number of 5 to 6. The proposed technical solution can be implemented when the number of extruders is 2, 3, 4, more than 6. Thus, the number of extruders in the process line can be 2 to 6. There can also be two extruders in the process line. There can also be three extruders in the process line. There can also be four extruders in the process line.

There can also be five extruders in the process line. There can also be six extruders in the process line. There can also be more than six extruders in the process line.

After the product is stabilized, a longitudinal or transverse notch of various depths and widths can be applied on its surface (depending on the customer's needs).

To fully stabilize the product, it is fed into a cooling chamber, where it is cooled with water, cold air, or with any other method. One or more haul-offs ensure continuous product flow along the process line.

Depending on the needs, the finished profile is cut with a cross-sectional and/or longitudinal saw into pieces of the required size and shape.

After cutting, the profile pieces are fed to the access hole sealing unit by filling the holes completely or partially with sealing, polystyrene or other water-resistant foam.

The product edges can be welded (fused) with sheet-like polymer plates of different thickness. Prior to complete sealing, tanks for drinking water, food, equipment, etc. may be mounted into the access holes.

In the case when pontoons are used for residential purposes, treatment plants for the treatment of wastewater and other flows are mounted into the access holes.

To access these tanks, vertical holes are cut in the upper section of the pontoon for laying pipelines and electrical networks.

To mount facilities or enclosures on the pontoon, access holes of various depths and diameters are drilled in the pontoon array to mount embedded metal parts, or without them. These holes are used for connecting pontoons to each other and for anchoring cables and ropes.

The pontoons or pontoon units made according to the method described in Example 4 represent the pontoons (pontoon units) of a large size, which is due to the number of extruders used, and they can have a continuous profile (without access holes) or a profile with access holes.

The upper section of pontoons or pontoon units made according to the method described in Example 4 can be flat (or with flanges of different heights), smooth, or with notches of different depths and widths. The bottom section of pontoons or pontoon units made according to the method described in Example 4 can be of various shapes: semicircular, triangular, catamaran, trimaran, etc.

According to the method described in Example 4, pontoon units of the following dimensions are mainly (but not exclusively) obtained: 3 and more meters wide, 1 and more meters high, 5 and more meters long.

Pontoons or pontoon units made according to the method described in Example 4 have a large margin of buoyancy.

The method described in Example 4 is technological and more advanced.

As we can see, the method described in Example 4 makes it possible to obtain solid pontoon units of a very large size with good buoyancy.

### Example 5.

The pontoon unit is manufactured with the use of waste processing products, particularly from recycled grade HDPE polyethylene granules (recycled high-density polyethylene) and/or MDPE (recycled medium-density polyethylene) and/or LDPE recycled low-density polyethylene), and/or LLDPE (linear low density polyethylene), and/or PEX (cross linked polyethylene), and/or PP (polypropylene), and/or CSPE(chlorosulfonated polyethylene), and/or UHMWPE (ultra-high molecular weight polyethylene), and/or their mixtures. To add colour to the product, dyes are added to the mixture.

The mixture melting point is 100 to 300 degrees Celsius.

The initial polymer raw material (in the form of granules, powder, tapes, etc.) is fed into the hopper of the extrusion line. Various additives, plasticizers and dyes are also added to the hopper. From the hopper, raw materials are fed to the extruder using an extrusion or belt (or other) loading line to force feed the material from the hopper to the extruder screw. While in the extruder, the polymer material is melted, plasticized, and then pumped into the moulding die.

Extrusion is carried out at a temperature of 100-300 degrees Celsius.

An extruder with multiple dies is used.

Screw, multi-screw, disk, or screwless extruders, or their combinations are used.

The extruder die may have various access holes that form the product's internal access holes.

From the moulding die, the product is fed into a vacuum stabilizer for stabilisation of the external surfaces and internal access holes.

After the product is stabilized, a longitudinal or transverse notch of various depths and widths can be applied on its surface (depending on the customer's needs).

To fully stabilize the product, it is fed into a cooling chamber, where it is cooled with water, cold air, or with any other method. One or more haul-offs ensure continuous product flow along the process line.

Depending on the needs, the finished profile is cut with a cross-sectional and/or longitudinal saw into pieces of the required size and shape.

After cutting, the profile pieces are fed to the access hole sealing unit by filling the holes completely or partially with sealing, polystyrene or other water-resistant foam.

The product edges can be welded (fused) with sheet-like polymer plates of different thickness. Prior to complete sealing, tanks for drinking water, food, equipment, etc. may be mounted into the access holes.

In the case when pontoons are used for residential purposes, treatment plants for the treatment of wastewater and other flows are mounted into the access holes.

To access these tanks, vertical holes are cut in the upper section of the pontoon for laying pipelines and electrical networks.

To mount facilities or enclosures on the pontoon, access holes of various depths and diameters are drilled in the pontoon array to mount embedded metal parts, or without them. These holes are used for connecting pontoons to each other and for anchoring cables and ropes.

The pontoons or pontoon units made according to the method described in Example 5 represent the pontoons (pontoon units) of a large size, which is due to the number of extruders used, and they can have a continuous profile (without access holes) or a profile with access holes.

The upper section of pontoons or pontoon units made according to the method described in Example 5 can be flat (or with flanges of different heights), smooth, or with notches of different depths and widths. The bottom section of pontoons or pontoon units made according to the method described in Example 5 can be of various shapes: semicircular, triangular, catamaran, trimaran, etc.

According to the method described in Example 5, pontoon units of the following dimensions are mainly (but not exclusively) obtained: 3 and more meters wide, 1 and more meters high, 5 and more meters long.

Pontoons or pontoon units made according to the method described in Example 5 have a large margin of buoyancy.

The method described in Example 5 is technological and more advanced.

As we can see, the method described in Example 5 makes it possible to obtain solid pontoon units of a very large size with good buoyancy.

### Example 6.

The pontoon unit is manufactured with the use of waste processing products, particularly from recycled grade HDPE polyethylene granules (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE(chlorosulfonated polyethylene), and/or UHMWPE (ultra-high molecular weight polyethylene), and/or their mixtures with the addition of initial polyethylene.

To add colour to the product, dyes are added to the mixture.

The mixture melting point is 100 to 250 degrees Celsius.

The initial polymer raw material (in the form of granules, powder, tapes, etc.) is fed into the hopper of the extrusion line. Various additives, plasticizers and dyes are also added to the hopper. From the hopper, raw materials are fed to the extruder using an extrusion or belt (or other) loading line to force feed the material from the hopper to the extruder screw. While in the extruder, the polymer material is melted, plasticized, and then pumped into the moulding die Extrusion is carried out at a temperature of 100 to 250 degrees Celsius.

An extruder with multiple dies is used.

Screw, multi-screw, disk, or screwless extruders, or their combinations are used.

The extruder die may have various access holes that form the product's internal access holes.

From the moulding die, the product is fed into a vacuum stabilizer for stabilisation of the external surfaces and internal access holes.

After the product is stabilized, a longitudinal or transverse notch of various depths and widths can be applied on its surface (depending on the customer's needs).

To fully stabilize the product, it is fed into a cooling chamber, where it is cooled with water, cold air, or with any other method. One or more haul-offs ensure continuous product flow along the process line.

Depending on the needs, the finished profile is cut with a cross-sectional and/or longitudinal saw into pieces of the required size and shape.

After cutting, the profile pieces are fed to the access hole sealing unit by filling the holes completely or partially with sealing, polystyrene or other water-resistant foam.

The product edges can be welded (fused) with sheet-like polymer plates of different thickness. Prior to complete sealing, tanks for drinking water, food, equipment, etc. may be mounted into the access holes.

In the case when pontoons are used for residential purposes, treatment plants for the treatment of wastewater and other flows are mounted into the access holes.

To access these tanks, vertical holes are cut in the upper section of the pontoon for laying pipelines and electrical networks.

To mount facilities or enclosures on the pontoon, access holes of various depths and diameters are drilled in the pontoon array to mount embedded metal parts, or without them. These holes are used for connecting pontoons to each other and for anchoring cables and ropes.

The pontoons or pontoon units made according to the method described in Example 6 represent the pontoons (pontoon units) of a large size, which is due to the number of extruders used, and they can have a continuous profile (without access holes) or a profile with access holes.

The upper section of pontoons or pontoon units made according to the method described in Example 6 can be flat (or with flanges of different heights), smooth, or with notches of different depths and widths. The bottom section of pontoons or pontoon units made according to the method described in Example 6 can be of various shapes: semicircular, triangular, catamaran, trimaran, etc.

According to the method described in Example 6, pontoon units of the following dimensions are mainly (but not exclusively) obtained: 3 and more meters wide, 1 and more meters high, 5 and more meters long.

Pontoons or pontoon units made according to the method described in Example 6 have a large margin of buoyancy.

The method described in Example 6 is technological and more advanced.

As we can see, the method described in Example 6 makes it possible to obtain solid pontoon units of very large size with good buoyancy.

### Example 7.

The pontoon unit is manufactured with the use of waste processing products, particularly from recycled grade HDPE polyethylene granules (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE(chlorosulfonated polyethylene), and/or UHMWPE (ultra-high molecular weight polyethylene), and/or their mixtures. To add colour to the product, dyes are added to the mixture.

The mixture melting point is 100 to 300 degrees Celsius.

The initial polymer raw material (in the form of granules, powder, tapes, etc.) is fed into the hopper of the extrusion line. Various additives, plasticizers and dyes are also added to the hopper. From the hopper, raw materials are fed to the extruder using an extrusion or belt (or other) loading line to force feed the material from the hopper to the extruder screw. While in the extruder, the polymer material is melted, plasticized, and then pumped into the moulding die. Extrusion is carried out at a temperature of 100-300 degrees Celsius.

Extrusion is performed using extruders bonded together by a single common die, while the number of extruders exceeds one.

Screw, multi-screw, disk, or screwless extruders, or their combinations are used.

The so-called set of extruders operates, which represents several parallel extruders, with their preferential number of 5 to 6.

The proposed technical solution can be implemented when the number of extruders is 2, 3, 4, more than 6. Thus, the number of extruders in the process line can be 2 to 6. There can also be two extruders in the process line. There can also be three extruders in the process line. There can also be four extruders in the process line. There can also be five extruders in the process line. There can also be six extruders in the process line. There can also be more than six extruders in the process line.

The extruder die may have various access holes that form the product's internal access holes.

From the moulding die, the product is fed into a vacuum stabilizer for stabilisation of the external surfaces and internal access holes.

After the product is stabilized, a longitudinal or transverse notch of various depths and widths can be applied on its surface (depending on the customer's needs).

To fully stabilize the product, it is fed into a cooling chamber, where it is cooled with water, cold air, or with any other method. One or more haul-offs ensure continuous product flow along the process line.

Depending on the needs, the finished profile is cut with a cross-sectional and/or longitudinal saw into pieces of the required size and shape.

After cutting, the profile pieces are fed to the access hole sealing unit by filling the holes completely or partially with sealing, polystyrene or other water-resistant foam.

The product edges can be welded (fused) with sheet-like polymer plates of different thickness. Prior to complete sealing, tanks for drinking water, food, equipment, etc. may be mounted into the access holes.

In the case when pontoons are used for residential purposes, treatment plants for the treatment of wastewater and other flows are mounted into the access holes.

To access these tanks, vertical holes are cut in the upper section of the pontoon for laying pipelines and electrical networks.

To mount facilities or enclosures on the pontoon, access holes of various depths and diameters are drilled in the pontoon array to mount embedded metal parts, or without them. These holes are used for connecting pontoons to each other and for anchoring cables and ropes.

The pontoons or pontoon units made according to the method described in Example 7 represent the pontoons (pontoon units) of a large size, which is due to the number of extruders used, and they can have a continuous profile (without access holes) or a profile with access holes.

The upper section of pontoons or pontoon units made according to the method described in Example 7 can be flat (or with flanges of different heights), smooth, or with notches of different depths and widths. The bottom section of pontoons or pontoon units made according to the method described in Example 7 can be of various shapes: semicircular, triangular, catamaran, trimaran, etc.

According to the method described in Example 7, pontoon units of the following size are mainly (but not exclusively) obtained: 3 and more meters wide, 1 and more meters high, 5 and more meters long.

Pontoons or pontoon units made according to the method described in Example 7 have a large margin of buoyancy.

The method described in Example 7 is technological and more advanced.

As we can see, the method described in Example 7 makes it possible to obtain solid pontoon units of a very large size with good buoyancy.

### Example 8.

The pontoon unit is manufactured with the use of waste processing products, particularly from recycled grade HDPE polyethylene granules (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE(chlorosulfonated polyethylene), and/or UHMWPE (ultra-high molecular weight polyethylene), and/or their mixtures with the addition of initial polyethylene. To add colour to the product, dyes are added to the mixture.

The mixture melting point is 100 to 250 degrees Celsius.

The initial polymer raw material (in the form of granules, powder, tapes, etc.) is fed into the hopper of the extrusion line. Various additives, plasticizers and dyes are also added to the hopper. From the hopper, raw materials are fed to the extruder using an extrusion or belt (or other) loading line to force feed the material from the hopper to the extruder screw. While in the extruder, the polymer material is melted, plasticized, and then pumped into the moulding die. Extrusion is carried out at a temperature of 100 to 250 degrees Celsius.

Extrusion is performed using extruders bonded together by a single common die, while the number of extruders exceeds one.

Screw, multi-screw, disk, or screwless extruders, or their combinations are used.

The so-called set of extruders operates, which represents several parallel extruders, with their preferential number of 5 to 6. The proposed technical solution can be implemented when the number of extruders is 2, 3, 4, more than 6. Thus, the number of extruders in the process line can be 2 to 6. There can also be two extruders in the process line. There can also be three extruders in the process line. There can also be four extruders in the process line. There can also be five extruders in the process line. There can also be six extruders in the process line. There can also be more than six extruders in the process line.

The extruder die may have various access holes that form the product's internal access holes.

From the moulding die, the product is fed into a vacuum stabilizer for stabilisation of the external surfaces and internal access holes.

After the product is stabilized, a longitudinal or transverse notch of various depths and widths can be applied on its surface (depending on the customer's needs).

To fully stabilize the product, it is fed into a cooling chamber, where it is cooled with water, cold air, or with any other method. One or more haul-offs ensure continuous product flow along the process line.

Depending on the needs, the finished profile is cut with a cross-sectional and/or longitudinal saw into pieces of the required size and shape.

After cutting, the profile pieces are fed to the access hole sealing unit by filling the holes completely or partially with sealing, polystyrene or other water-resistant foam.

The product edges can be welded (fused) with sheet-like polymer plates of different thickness. Prior to complete sealing, tanks for drinking water, food, equipment, etc. may be mounted into the access holes.

In the case when pontoons are used for residential purposes, treatment plants for the treatment of wastewater and other flows are mounted into the access holes.

To access these tanks, vertical holes are cut in the upper section of the pontoon for laying pipelines and electrical networks.

To mount facilities or enclosures on the pontoon, access holes of various depths and diameters are drilled in the pontoon array to mount embedded metal parts, or without them. These holes are used for connecting pontoons to each other and for anchoring cables and ropes.

The pontoons or pontoon units made according to the method described in Example 8 represent the pontoons (pontoon units) of a large size, which is due to the number of extruders used, and they can have a continuous profile (without access holes) or a profile with access holes.

The upper section of pontoons or pontoon units made according to the method described in Example 8 can be flat (or with flanges of different heights), smooth, or with notches of different depths and widths. The bottom section of pontoons or pontoon units made according to the method described in Example 8 can be of various shapes: semicircular, triangular, catamaran, trimaran, etc.

According to the method described in Example 8, pontoon units of the following dimensions are mainly (but not exclusively) obtained: 3 and more meters wide, 1 and more meters high, 5 and more meters long.

Pontoons or pontoon units made according to the method described in Example 8 have a large margin of buoyancy.

The method described in Example 8 is technological and more advanced.

As we can see, the method described in Example 8 makes it possible to obtain solid pontoon units of a very large size with good buoyancy.

It should be understood that the above embodiment examples serve solely for demonstrative purposes, and professionals in this field are offered various modifications and changes that are covered by the nature of this application and the scope of the formula. It should be understood that the above information in no way limits the scope of rights under the application, in no way limits the number of possible embodiments of inventions, but only explains the features of the technical solutions set out in the formula.

### Industrial Applicability

The methods and pontoon units proposed in the present technical solution can be implemented on a special processing line using special equipment with the use of special materials, tools and operations, which confirms the industrial applicability of the proposed embodiments of the technical solution.

The floating pontoon units obtained by the proposed methods can be used on water as follows: construction of pontoon crossings for various types of equipment and people, for the organization of mooring piers, for parking and storage of various watercrafts by connecting pontoons in various ways using anchors and plummets, mounting and installation of various residential and non-residential, industrial, repair, utility and service rooms of various shapes and storeys. The pontoon unit can be self-propelled, if engines of different systems and modifications are mounted on it.

The proposed technical solutions do not contain any components that cannot be reproduced in practice.

For professionals in this field, possible further modifications of the claimed object are obvious, which is covered by the essence of the claimed object, as it is demonstrated in the formula.

## Claims

1. The method for pontoon unit manufacturing, according to which polymer raw materials are extruded, wherein the raw material is a waste processing product-recycled polyethylene.

2. The method in accordance with claim 1, wherein the extrusion is carried out at a temperature of 100-300 degrees Celsius.

3. The method in accordance with any of claims 1-2, wherein dyes are added to the raw material mixture to acquire the colour of the end product.

4. The method in accordance with any of claims 1-3, wherein additives and/or plasticizers and/or dyes are used as additives suitable for enhancing extrusion.

5. The method in accordance with any of claims 1-4, wherein the water-resistant foam is a sealing, polystyrene, or other water-resistant foam.

6. The method in accordance with any of claims 1-5, wherein the waste processing product is a recycled polyethylene of the following grades: HDPE polyethylene (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

7. The method in accordance with any of claims 1-6, wherein the recycled polyethylene is presented in the form of granules and/or powder and/or tapes.

8. The method in accordance with any of claims 1-7, wherein the product edges are welded or fused with sheet-like polymer plates of different thickness.

9. The method in accordance with any of claims 1-8, wherein tanks for drinking water, products, or equipment are mounted in the access holes prior to sealing.

10. The method in accordance with any of claims 1-9, wherein treatment plants are mounted in the access holes for the treatment of wastewater and other flows.

11. The method in accordance with any of claims 1-10, wherein vertical holes are cut for mounting pipelines and electrical networks to provide access to the tanks in the upper section of the pontoon.

12. The method for manufacturing a floating pontoon unit of a large size, according to which polymer raw materials are extruded, wherein the raw material is a waste processing product, namely, recycled polyethylene, and there are more than one extruders.

13. The method in accordance with claim 12, wherein the extrusion is carried out at a temperature of 100-300 degrees Celsius.

14. The method in accordance with any of claims 12-13, wherein dyes are added to the raw material mixture to acquire the colour of the end product.

15. The method in accordance with any of claims 12-14, wherein additives and/or plasticizers and/or dyes are used as additives suitable for enhancing extrusion.

16. The method in accordance with any of claims 12-15, wherein the water-resistant foam is a sealing, polystyrene, or other water-resistant foam.

17. The method in accordance with any of claims 12-16, wherein waste processing products are the recycled grade HDPE polyethylene (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

18. The method in accordance with any of claims 12-17, wherein the recycled polyethylene is presented in the form of granules and/or powder and/or tapes.

19. The method in accordance with any of claims 12-18, wherein the product edges are welded or fused with sheet-like polymer plates of different thickness.

20. The method in accordance with any of claims 12-19, wherein tanks for drinking water, products, or equipment are mounted in the access holes prior to sealing.

21. The method in accordance with any of claims 12-20, wherein treatment plants are mounted in the access holes for the treatment of wastewater and other flows.

22. The method in accordance with any of claims 12-21, wherein vertical holes are cut for mounting pipelines and electrical networks to provide access to the tanks in the upper section of the pontoon.

23. The method for manufacturing a floating pontoon unit of a large size, according to which polymer raw materials are extruded, additives are added to polymer raw materials to enhance the extrusion, followed by vacuum stabilization and cooling; the product finished profile is pulled along the process line using haul-offs and the end product is cut using longitudinal and/or cross-sectional saws into pieces of the required size and shape, the access holes are sealed, wherein the raw material is a waste processing product, namely, recycled polyethylene.

24. The method in accordance with claim 23, wherein the extrusion is carried out at a temperature of 100-300 degrees Celsius.

25. The method in accordance with any of claims 23-24, wherein dyes are added to the raw material mixture to acquire the colour of the end product.

26. The method in accordance with any of claims 23-25, wherein additives and/or plasticizers and/or dyes are used as additives suitable for enhancing extrusion.

27. The method in accordance with any of claims 23-26, wherein the water-resistant foam is a sealing, polystyrene, or other water-resistant foam.

28. The method in accordance with any of claims 23-27, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

29. The method in accordance with any of claims 23-28, wherein the recycled polyethylene is presented in the form of granules and/or powder and/or tapes.

30. The method in accordance with any of claims 23-29, wherein the product edges are welded or fused with sheet-like polymer plates of different thickness.

31. The method in accordance with any of claims 23-30, wherein tanks for drinking water, products, or equipment are mounted in the access holes prior to sealing.

32. The method in accordance with any of claims 23-31, wherein treatment plants are mounted in the access holes for the treatment of wastewater and other flows.

33. The method in accordance with any of claims 23-32, wherein vertical holes are cut for mounting pipelines and electrical networks to provide access to the tanks in the upper section of the pontoon.

34. The method for manufacturing a floating pontoon unit of a large size, according to which polymer raw materials are extruded, additives are added to polymer raw materials to enhance the extrusion, followed by vacuum stabilization and cooling; the product finished profile is pulled along the process line using haul-offs and the end product is cut using longitudinal and/or cross-sectional saws into pieces of the required size and shape, the access holes are sealed, wherein the raw material is a waste processing product, namely, recycled polyethylene, and there are more than one extruders.

35. The method in accordance with claim 12, wherein the extrusion is carried out at a temperature of 100-300 degrees Celsius.

36. The method in accordance with any of claims 34-35, wherein dyes are added to the raw material mixture to acquire the colour of the end product.

37. The method in accordance with any of claims 34-36, wherein admixtures and/or plasticizers/ and/or dyes are used as additives suitable for enhancing extrusion.

38. The method in accordance with any of claims 34-37, wherein the water-resistant foam is a sealing, polystyrene, or other water-resistant foam.

39. The method in accordance with any of claims 34-38, wherein the waste processing product is a recycled polyethylene of the following grades: HDPE, and/or MDPE, and/or LDPE, and/or LLDPE, and/or PEX, and/or PP, and/or CSPE, and/or UHMWPE, and/or their mixtures.

40. The method in accordance with any of claims 34-39, wherein the recycled polyethylene is presented in the form of granules and/or powder and/or tapes.

41. The method in accordance with any of claims 34-40, wherein the product edges are welded or fused with sheet-like polymer plates of different thickness.

42. The method in accordance with any of claims 34-41, wherein tanks for drinking water, products, or equipment are mounted in the access holes prior to sealing.

43. The method in accordance with any of claims 34-42, wherein treatment plants are mounted in the access holes for the treatment of wastewater and other flows.

44. The method in accordance with any of claims 34-43, wherein vertical holes are cut for mounting pipelines and electrical networks to provide access to the tanks in the upper section of the pontoon.

45. The pontoon unit of a large size that comprises a body, upper section and edges, while the pontoon unit is made of polymer raw materials-a waste processing product-recycled polyethylene.

46. The pontoon unit in accordance with claim 45, wherein the bottom section has the following shape: straight, semicircular or triangular, or the catamaran or trimaran configuration, with or without flanges.

47. The pontoon unit in accordance with any of claims 45-46, wherein access holes are present.

48. The pontoon unit in accordance with any of claims 45-47, wherein the product edges are welded or fused with sheet-like polymer plates.

49. The pontoon unit in accordance with any of claims 45-48, wherein tanks for drinking water, products, or equipment are mounted in the access holes.

50. The pontoon unit in accordance with any of claims 45-49, wherein treatment plants are mounted in the access holes for the treatment of wastewater and other flows.

51. The pontoon unit in accordance with any of claims 45-40, wherein vertical holes are cut for mounting pipelines and electrical networks to provide access to the tanks in the upper section of the pontoon.

52. The pontoon unit of a large size that comprises a body, upper section and edges, while the pontoon unit is made of polymer raw materials-a waste processing product-recycled polyethylene, **characterized by** being produced under claim 1.

53. The pontoon unit in accordance with claim 52 **characterized by** having the following shape of the bottom section: straight, semicircular or triangular, or the catamaran or trimaran configuration, with or without flanges.

54. The pontoon unit in accordance with any of claims 52-53, wherein access holes are present.

55. The pontoon unit in accordance with any of claims 52-54, wherein the product edges are welded or fused with sheet-like polymer plates.

56. The pontoon unit in accordance with any of claims 52-55, wherein tanks for drinking water, products, or equipment are mounted in the access holes.

57. The pontoon unit in accordance with any of claims 52-56, wherein treatment plants are mounted in the access holes for the treatment of wastewater and other flows.

58. The pontoon unit in accordance with any of claims 52-57, wherein vertical holes are cut for mounting pipelines and electrical networks to provide access to the tanks in the upper section of the pontoon.

59. The pontoon unit of a large size that comprises a body, upper section and edges, while the pontoon unit is made of polymer raw materials-a waste processing product-recycled polyethylene, **characterized by** being produced under claim 12.

60. The pontoon unit in accordance with claim 59 **characterized by** having the following shape of the bottom section: straight, semicircular or triangular, or the catamaran or trimaran configuration, with or without flanges.

61. The pontoon unit in accordance with any of claims 59-60, wherein access holes are present.

62. The pontoon unit in accordance with any of claims 59-61, wherein the product edges are welded or fused with sheet-like polymer plates.

63. The pontoon unit in accordance with any of claims 59-62, wherein tanks for drinking water, products, equipment are mounted in the access holes.

64. The pontoon unit in accordance with any of claims 59-63, wherein treatment plants are mounted in the access holes for the treatment of wastewater and other flows.

65. The pontoon unit in accordance with any of claims 59-64, wherein vertical holes are cut for mounting pipelines and electrical networks to provide access to the tanks in the upper section of the pontoon.

66. The pontoon unit of a large size that comprises a body, upper section and edges, while the pontoon unit is made of polymer raw materials-a waste processing product-recycled polyethylene, **characterized by** being produced under claim 23.

67. The pontoon unit in accordance with claim 66 **characterized by** having the following shape of the bottom section: straight, semicircular or triangular, or the catamaran or trimaran configuration, with or without flanges.

68. The pontoon unit in accordance with any of claims 66-67, wherein access holes are present.

69. The pontoon unit in accordance with any of claims 66-68, wherein the product edges are welded or fused with sheet-like polymer plates,

70. The pontoon unit in accordance with any of claims 66-69, wherein tanks for drinking water, products, or equipment are mounted in the access holes.

71. The pontoon unit in accordance with any of claims 66-70, wherein treatment plants are mounted in the access holes for the treatment of wastewater and other flows.

72. The pontoon unit in accordance with any of the claims 66-71, wherein vertical holes are cut for mounting pipelines and electrical networks to provide access to the tanks in the upper section of the pontoon.

73. The pontoon unit of a large size that comprises a body, upper section and edges, while the pontoon unit is made of polymer raw materials-a waste processing product-recycled polyethylene, **characterized by** being produced under claim 34.

74. The pontoon unit in accordance with claim 73 **characterized by** having the following shape of the bottom section: straight, semicircular or triangular, or the catamaran or trimaran configuration, with or without flanges.

75. The pontoon unit in accordance with any of claims 73-74, wherein access holes are present.

76. The pontoon unit in accordance with any of claims 73-75, wherein the product edges are welded or fused with sheet-like polymer plates.

77. The pontoon unit in accordance with any of claims 73-76, wherein tanks for drinking water, products, or equipment are mounted in the access holes.

78. The pontoon unit in accordance with any of claims 73-77, wherein treatment plants are mounted in the access holes for the treatment of wastewater and other flows.

79. The pontoon unit in accordance with any of claims 73-78, wherein vertical holes are cut for mounting pipelines and electrical networks to provide access to the tanks in the upper section of the pontoon.

80. The method for manufacturing a pontoon unit of a large size, according to which polymer raw materials are extruded, wherein the raw material is a waste processing product-recycled polyethylene with initial polyethylene added.

81. The method in accordance with claim 80, which is **characterized by** extrusion carried out at a temperature of 100-250 degrees Celsius.

82. The method in accordance with any of claims 80-81, wherein dyes are added to the raw material mixture to acquire the colour of the end product.

83. The method in accordance with any of claims 80-82, wherein additives and/or plasticizers and/or dyes are used as additives suitable for enhancing extrusion.

84. The method in accordance with any of claims 80-83, wherein the water-resistant foam is a sealing, polystyrene, or other water-resistant foam.

85. The method in accordance with any of claims 80-84, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

86. The method in accordance with any of claims 80-85, wherein the recycled polyethylene is presented in the form of granules and/or powder and/or tapes.

87. The method in accordance with any of claims 80-86, wherein the product edges are welded or fused with sheet-like polymer plates of different thickness.

88. The method in accordance with any of the claims 80-87, wherein tanks for drinking water, products, or equipment are mounted in the access holes prior to sealing.

89. The method in accordance with any of claims 80-88, wherein treatment plants are mounted in the access holes for the treatment of wastewater and other flows.

90. The method in accordance with any of claims 80-89, wherein vertical holes are cut for mounting pipelines and electrical networks to provide access to the tanks in the upper section of the pontoon.

91. The method for manufacturing a pontoon unit of a large size, according to which polymer raw materials are extruded, wherein the raw material is a waste processing product, namely, recycled polyethylene with initial polyethylene added, and there are more than one extruders.

92. The method in accordance with claim 91, which is **characterized by** extrusion carried out at a temperature of 100-250 degrees Celsius.

93. The method in accordance with any of claims 91-92, wherein dyes are added to the raw material mixture to acquire the colour of the end product.

94. The method in accordance with any of claims 91-93, wherein admixtures and/or plasticizers and/or dyes are used as additives suitable for enhancing extrusion.

95. The method in accordance with any of claims 91-94, wherein the water-resistant foam is a sealing, polystyrene, or other water-resistant foam.

96. The method in accordance with any of claims 91-95, wherein the waste processing product is a recycled polyethylene of the following grades: HDPE, and/or MDPE, and/or LDPE, and/or LLDPE, and/or PEX, and/or PP, and/or CSPE, and/or UHMWPE, and/or their mixtures.

97. The method in accordance with any of claims 91-96, wherein the recycled polyethylene is presented in the form of granules and/or powder and/or tapes.

98. The method in accordance with any of the claims 91-97, wherein the product edges are welded or fused with sheet-like polymer plates of different thickness.

99. The method in accordance with any of claims 91-98, wherein tanks for drinking water, products, or equipment are mounted in the access holes prior to sealing.

100. The method in accordance with any of claims 91-99, wherein treatment plants are mounted in the access holes for the treatment of wastewater and other flows.

101. The method in accordance with any of claims 91-100, wherein vertical holes are cut for mounting pipelines and electrical networks to provide access to the tanks in the upper section of the pontoon.

102. The method for manufacturing a floating pontoon unit of a large size, according to which polymer raw materials are extruded, additives are added to polymer raw materials to enhance the extrusion, followed by vacuum stabilization and cooling; the product finished profile is pulled along the process line using haul-offs and the finished product is cut using longitudinal and/or cross-sectional saws into pieces of the required size and shape, the access holes are sealed, wherein the raw material is a waste processing product, namely, recycled polyethylene with initial polyethylene added.

103. The method in accordance with claim 102, wherein the extrusion is carried out at a temperature of 100-250 degrees Celsius.

104. The method in accordance with any of claims 102-103, wherein dyes are added to the raw material mixture to acquire the colour of the end product.

105. The method in accordance with any of claims 102-104, wherein admixtures and/or plasticizers and/or dyes are used as additives suitable for enhancing extrusion.

106. The method in accordance with any of claims 102-105, wherein the water-resistant foam is a sealing, polystyrene, or other water-resistant foam.

107. The method in accordance with any of claims 102-106, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

108. The method in accordance with any of claims 102-107, wherein the recycled polyethylene is presented in the form of granules and/or powder and/or tapes.

109. The method in accordance with any of claims 102-108, wherein the product edges are welded or fused with sheet-like polymer plates of different thickness.

110. The method in accordance with any of claims 102-109, wherein tanks for drinking water, products, or equipment are mounted in the access holes prior to sealing.

111. The method in accordance with any of claims 102-110, wherein treatment plants are mounted in the access holes for the treatment of wastewater and other flows.

112. The method in accordance with any of claims 102-111, wherein vertical holes are cut for mounting pipelines and electrical networks to provide access to the tanks in the upper section of the pontoon.

113. The method for manufacturing a floating pontoon unit of a large size, according to which polymer raw materials are extruded, additives are added to polymer raw materials to enhance the extrusion, followed by vacuum stabilization and cooling; the product finished profile is pulled along the process line using haul-offs and the finished product is cut using longitudinal and/or cross-sectional saws into pieces of the required size and shape, the access holes are sealed, wherein the raw material is a waste processing product, namely, recycled polyethylene with initial polyethylene added, while the extruders are arranged in parallel in the process line and their number exceeds one.

114. The method in accordance with claim 113, wherein the extrusion is carried out at a temperature of 100-250 degrees Celsius.

115. The method in accordance with any of claims 113-114, wherein dyes are added to the raw material mixture to acquire the colour of the end product.

116. The method in accordance with any of claims 113-115, wherein admixtures and/or plasticizers and/or dyes are used as additives suitable for enhancing extrusion.

117. The method in accordance with any of claims 113-116, wherein the water-resistant foam is a sealing, polystyrene, or other water-resistant foam.

118. The method in accordance with any of claims 113-117, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

119. The method in accordance with any of claims 113-118, wherein the recycled polyethylene is presented in the form of granules and/or powder and/or tapes.

120. The method in accordance with any of claims 113-119, wherein the product edges are welded or fused with sheet-like polymer plates of different thickness.

121. The method in accordance with any of claims 113-120, wherein tanks for drinking water, products, or equipment are mounted in the access holes prior to sealing.

122. The method in accordance with any of claims 113-121, wherein treatment plants are mounted in the access holes for the treatment of wastewater and other flows.

123. The method in accordance with any of claims 113-122, wherein vertical holes are cut for mounting pipelines and electrical networks to provide access to the tanks in the upper section of the pontoon.

124. The method for manufacturing a floating pontoon unit of a large size, according to which polymer raw materials are extruded, additives are added to polymer raw materials to enhance the extrusion, followed by vacuum stabilization and cooling; the product finished profile is pulled along the process line using haul-offs and the finished product is cut using longitudinal and/or cross-sectional saws into pieces of the required size and shape, the access holes are sealed, wherein the raw material is a waste processing product, namely, recycled polyethylene with initial polyethylene added, while the extruders are arranged in parallel in the process line and their number exceeds one, preferably 5 to 6.

125. The method in accordance with claim 124, wherein the extrusion is carried out at a temperature of 100-250 degrees Celsius.

126. The method in accordance with any of claims 124-125, wherein dyes are added to the raw material mixture to acquire the colour of the end product.

127. The method in accordance with any of claims 124-126, wherein admixtures and/or plasticizers and/or dyes are used as additives suitable for enhancing extrusion.

128. The method in accordance with any of claims 124-127, wherein the water-resistant foam is a sealing, polystyrene, or other water-resistant foam.

129. The method in accordance with any of claims 124-128, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

130. The method in accordance with any of claims 124-129, wherein the recycled polyethylene is presented in the form of granules and/or powder and/or tapes.

131. The method in accordance with any of claims 124-130, wherein the product edges are welded or fused with sheet-like polymer plates of different thickness.

132. The method in accordance with any of claims 124-131, wherein tanks for drinking water, products, or equipment are mounted in the access holes prior to sealing.

133. The method in accordance with any of claims 124-132, wherein treatment plants are mounted in the access holes for the treatment of wastewater and other flows.

134. The method in accordance with any of claims 124-133, wherein vertical holes are cut for mounting pipelines and electrical networks to provide access to the tanks in the upper section of the pontoon.

135. The pontoon unit of a large size that comprises a body, upper section and edges, while the pontoon unit is made of polymer raw materials-a waste processing product-recycled polyethylene with initial polyethylene added.

136. The pontoon unit in accordance with claim 135, **characterized by** having the following shape of the bottom section: straight, semicircular or triangular, or the catamaran or trimaran configuration, with or without flanges.

137. The pontoon unit in accordance with any of claims 135-136, wherein access holes are present.

138. The pontoon unit in accordance with any of claims 135-137, wherein the product edges are welded or fused with sheet-like polymer plates.

139. The pontoon unit in accordance with any of claims 135-138, wherein tanks for drinking water, products, or equipment are mounted in the access holes.

140. The pontoon unit in accordance with any of claims 135-139, wherein treatment plants are mounted in the access holes for the treatment of wastewater and other flows.

141. The pontoon unit in accordance with any of claims 135-140, **characterized by** having vertical holes cut for mounting pipelines and electrical networks to provide access to the tanks in the upper section of the pontoon.

142. The pontoon unit of a large size that comprises a body, upper section and edges, while the pontoon unit is made of polymer raw materials-a waste processing product-recycled polyethylene with initial polyethylene added, **characterized by** being produced under claim 80.

143. The pontoon unit in accordance with claim 142, **characterized by** having the following shape of the bottom section: straight, semicircular or triangular, or the catamaran or trimaran configuration, with or without flanges.

144. The pontoon unit in accordance with any of claims 142-123, wherein access holes are present.

145. The pontoon unit in accordance with any of claims 142-144, wherein the product edges are welded or fused with sheet-like polymer plates.

146. The pontoon unit in accordance with any of claims 142-145, wherein tanks for drinking water, products, or equipment are mounted in the access holes.

147. The pontoon unit in accordance with any of claims 142-146, wherein treatment plants are mounted in the access holes for the treatment of wastewater and other flows.

148. The pontoon unit in accordance with any of claims 142-147, wherein vertical holes are cut for mounting pipelines and electrical networks to provide access to the tanks in the upper section of the pontoon.

149. The large pontoon unit of a large size that comprises a body, upper section and edges, while the pontoon unit is made of polymer raw materials-a waste processing product-recycled polyethylene with initial polyethylene added, **characterized by** being produced under claim 91.

150. The pontoon unit in accordance with claim 149 **characterized by** having the following shape of the bottom section: straight, semicircular or triangular, or the catamaran or trimaran configuration, with or without flanges.

151. The pontoon unit in accordance with any of claims 149-150, wherein access holes are present.

152. The pontoon unit in accordance with any of claims 149-151, wherein the product edges are welded or fused with sheet-like polymer plates.

153. The pontoon unit in accordance with any of claims 149-152, wherein tanks for drinking water, products, or equipment are mounted in the access holes,

154. The pontoon unit in accordance with any of claims 149-153, wherein treatment plants are mounted in the access holes for the treatment of wastewater and other flows.

155. The pontoon unit in accordance with any of claims 149-154, wherein vertical holes are cut for mounting pipelines and electrical networks to provide access to the tanks in the upper section of the pontoon.

156. The pontoon unit of a large size that comprises a body, upper section and edges, while the pontoon unit is made of polymer raw materials-a waste processing product-recycled polyethylene with initial polyethylene added, **characterized by** being produced under claim 102.

157. The pontoon unit in accordance with claim 156 **characterized by** having the following shape of the bottom section: straight, semicircular or triangular, or the catamaran or trimaran configuration, with or without flanges.

158. The pontoon unit in accordance with any of claims 156-157, wherein access holes are present, wherein access holes were made.

159. The pontoon unit in accordance with any of claims 156-158, wherein the product edges are welded or fused with sheet-like polymer plates.

160. The pontoon unit in accordance with any of claims 156-159, wherein tanks for drinking water, products, equipment are mounted in the access holes.

161. The pontoon unit in accordance with any of claims 156-160, wherein treatment plants are mounted in the access holes for the treatment of wastewater and other flows.

162. The pontoon unit in accordance with any of claims 156-161, wherein vertical holes are cut for mounting pipelines and electrical networks to provide access to the tanks in the upper section of the pontoon.

163. The pontoon unit of a large size that comprises a body, upper section and edges, while the pontoon unit is made of polymer raw materials-a waste processing product-recycled polyethylene with initial polyethylene added, **characterized by** being produced under claim 113.

164. The pontoon unit in accordance with claim 163 **characterized by** having the following shape of the bottom section: straight, semicircular or triangular, or the catamaran or trimaran configuration, with or without flanges.

165. The pontoon unit in accordance with any of claims 163-164, wherein access holes are present.

166. The pontoon unit in accordance with any of claims 163-165, wherein the product edges are welded or fused with sheet-like polymer plates.

167. The pontoon unit in accordance with any of claims 163-166, wherein tanks for drinking water, products, equipment are mounted in the access holes.

168. The pontoon unit in accordance with any of claims 163-167, wherein treatment plants are mounted in the access holes for the treatment of wastewater and other flows.

169. The pontoon unit in accordance with any of claims 163-168, wherein vertical holes are cut for mounting pipelines and electrical networks to provide access to the tanks in the upper section of the pontoon.

170. The pontoon unit of a large size that comprises a body, upper section and edges, while the pontoon unit is made of polymer raw materials-a waste processing product-recycled polyethylene with initial polyethylene added, **characterized by** being produced under claim 124.

171. The pontoon unit in accordance with claim 170 **characterized by** having the following shape of the bottom section: straight, semicircular or triangular, or the catamaran or trimaran configuration, with or without flanges.

172. The pontoon unit in accordance with any of claims 170-171, wherein access holes are present.

173. The pontoon unit in accordance with any of claims 170-172, wherein the product edges are welded or fused with sheet-like polymer plates.

174. The pontoon unit in accordance with any of claims 170-173, wherein tanks for drinking water, products, equipment are mounted in the access holes.

175. The pontoon unit in accordance with any of claims 170-174, wherein treatment plants are mounted in the access holes for the treatment of wastewater and other flows.

176. The pontoon unit in accordance with any of claims 170-175, wherein vertical holes are cut for mounting pipelines and electrical networks to provide access to the tanks in the upper section of the pontoon.

177. The method for manufacturing a pontoon unit of a large size, according to which the polymer raw material is extruded, while the raw material is a waste processing product, namely, recycled polyethylene, and the extrusion is carried out using an extruder that contains several dies.

178. The method in accordance with claim 177, wherein the extrusion is carried out at a temperature of 100-300 degrees Celsius.

179. The method in accordance with any of claims 177-178, wherein dyes are added to the raw material mixture to acquire the colour of the end product.

180. The method in accordance with any of claims 177-179, wherein admixtures and/or plasticizers and/or dyes are used as additives suitable for enhancing extrusion.

181. The method in accordance with any of claims 177-180, wherein the water-resistant foam is a sealing, polystyrene, or other water-resistant foam.

182. The method in accordance with any of claims 177-181, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

183. The method in accordance with any of claims 177-182, wherein the recycled polyethylene is presented in the form of granules and/or powder and/or tapes.

184. The method in accordance with any of claims 177-183, wherein the product edges are welded or fused with sheet-like polymer plates of different thickness.

185. The method in accordance with any of claims 177-184, wherein tanks for drinking water, products, or equipment are mounted in the access holes prior to sealing.

186. The method in accordance with any of claims 177-185, wherein treatment plants are mounted in the access holes for the treatment of wastewater and other flows.

187. The method in accordance with any of claims 177-186, wherein vertical holes are cut for mounting pipelines and electrical networks to provide access to the tanks in the upper section of the pontoon.

188. The method for manufacturing a pontoon unit of a large size, according to which polymer raw materials are extruded, additives are added to polymer raw materials to enhance the extrusion, followed by vacuum stabilization and cooling; the product finished profile is pulled along the process line using haul-offs and the finished product is cut using longitudinal and/or cross-sectional saws into pieces of the required size and shape, the access holes are sealed, wherein the raw material is a waste processing product, namely, recycled polyethylene, and the extrusion involves the extruder with several dies.

189. The method in accordance with claim 188, wherein the extrusion is carried out at a temperature of 100-300 degrees Celsius.

190. The method in accordance with any of claims 188-189, wherein dyes are added to the raw material mixture to acquire the colour of the end product.

191. The method in accordance with any of claims 188-190, wherein admixtures and/or plasticizers and/or dyes are used as additives suitable for enhancing extrusion.

192. The method in accordance with any of claims 188-191, wherein the water-resistant foam is a sealing, polystyrene, or other water-resistant foam.

193. The method in accordance with any of claims 188-192, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

194. The method in accordance with any of claims 188-193, wherein the recycled polyethylene is presented in the form of granules and/or powder and/or tapes.

195. The method in accordance with any of claims 188-194, wherein the product edges are welded or fused with sheet-like polymer plates of different thickness.

196. The method in accordance with any of claims 188-195, wherein tanks for drinking water, products, or equipment are mounted in the access holes prior to sealing.

197. The method in accordance with any of claims 188-196, wherein treatment plants are mounted in the access holes for the treatment of wastewater and other flows.

198. The method in accordance with any of claims 188-197, wherein vertical holes are cut for mounting pipelines and electrical networks to provide access to the tanks in the upper section of the pontoon.

199. The method for manufacturing a pontoon unit of a large size, according to which polymer raw materials are extruded, additives are added to polymer raw materials to enhance the extrusion, followed by vacuum stabilization and cooling; the product finished profile is pulled along the process line using haul-offs and the finished product is cut using longitudinal and/or cross-sectional saws into pieces of the required size and shape, the access holes are sealed, wherein the raw material is a waste processing product, namely, recycled polyethylene, while the extrusion involves an extruder with several dies; at the same time, the extruders are arranged in parallel in the process line, and their number exceeds one.

200. The method in accordance with claim 199, wherein the extrusion is carried out at a temperature of 100-300 degrees Celsius.

201. The method in accordance with any of claims 199-200, wherein dyes are added to the raw material mixture to acquire the colour of the end product.

202. The method in accordance with any of claims 199-201, wherein additives and/or plasticizers and/or dyes are used as additives suitable for enhancing extrusion.

203. The method in accordance with any of claims 199-202, wherein the water-resistant foam is a sealing, polystyrene, or other water-resistant foam.

204. The method in accordance with any of claims 199-203, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

205. The method in accordance with any of claims 199-204, wherein the recycled polyethylene is presented in the form of granules and/or powder and/or tapes.

206. The method in accordance with any of claims 199-205, wherein the product edges are welded or fused with sheet-like polymer plates of different thickness.

207. The method in accordance with any of claims 199-206, wherein tanks for drinking water, products, or equipment are mounted in the access holes prior to sealing.

208. The method in accordance with any of claims 199-207, wherein treatment plants are mounted in the access holes for the treatment of wastewater and other flows.

209. The method in accordance with any of claims 199-208, wherein vertical holes are cut for mounting pipelines and electrical networks to provide access to the tanks in the upper section of the pontoon.

210. The pontoon unit of a large size that comprises a body, upper section and edges, while the pontoon unit is made of polymer raw materials-a waste processing product-recycled polyethylene with initial polyethylene added, **characterized by** being produced under claim 177.

211. The pontoon unit in accordance with claim 210, **characterized by** having the following shape of the bottom section: straight, semicircular or triangular, or the catamaran or trimaran configuration, with or without flanges.

212. The pontoon unit in accordance with any of claims 210-211, wherein access holes are present.

213. The pontoon unit in accordance with any of claims 210-212, wherein the product edges are welded or fused with sheet-like polymer plates.

214. The pontoon unit in accordance with any of claims 210-213, wherein tanks for drinking water, products, equipment are mounted in the access holes.

215. The pontoon unit in accordance with any of claims 210-214, wherein treatment plants are mounted in the access holes for the treatment of wastewater and other flows.

216. The pontoon unit in accordance with any of claims 210-215, wherein vertical holes are cut for mounting pipelines and electrical networks to provide access to the tanks in the upper section of the pontoon.

217. The pontoon unit of a large size that comprises a body, upper section and edges, while the pontoon unit is made of polymer raw materials-a waste processing product-recycled polyethylene with initial polyethylene added, **characterized by** being produced under claim 188.

218. The pontoon unit in accordance with claim 217 **characterized by** having the following shape of the bottom section: straight, semicircular or triangular, or the catamaran or trimaran configuration, with or without flanges.

219. The pontoon unit in accordance with any of claims 217-218, wherein access holes are present.

220. The pontoon unit in accordance with any of claims 217-219, wherein the product edges are welded or fused with sheet-like polymer plates.

221. The pontoon unit in accordance with any of claims 217-220, wherein tanks for drinking water, products, equipment are mounted in the access holes.

222. The pontoon unit in accordance with any of claims 217-221, wherein treatment plants are mounted in the access holes for the treatment of wastewater and other flows.

223. The pontoon unit in accordance with any of claims 217-222, wherein vertical holes are cut for mounting pipelines and electrical networks to provide access to the tanks in the upper section of the pontoon.

224. The pontoon unit of a large size that comprises a body, upper section and edges, while the pontoon unit is made of polymer raw materials-a waste processing product-recycled polyethylene with initial polyethylene added, **characterized by** being produced under claim 199.

225. The pontoon unit in accordance with claim 224 **characterized by** having the following shape of the bottom section: straight, semicircular or triangular, or the catamaran or trimaran configuration, with or without flanges.

226. The pontoon unit in accordance with any of claims 224-225, wherein access holes are present.

227. The pontoon unit in accordance with any of claims 224-226, wherein the product edges are welded or fused with sheet-like polymer plates.

228. The pontoon unit in accordance with any of claims 224-227, wherein tanks for drinking water, products, equipment are mounted in the access holes.

229. The pontoon unit in accordance with any of claims 224-228, wherein treatment plants are mounted in the access holes for the treatment of wastewater and other flows.

230. The pontoon unit in accordance with any of claims 224-229, wherein vertical holes are cut for mounting pipelines and electrical networks to provide access to the tanks in the upper section of the pontoon.

231. The method for manufacturing a pontoon unit of a large size, according to which the polymer raw material is extruded, while the raw material is a waste processing product, namely, recycled polyethylene with initial polyethylene added, and the extrusion involves an extruder with several dies.

232. The method in accordance with claim 231, which is **characterized by** extrusion carried out at a temperature of 100-250 degrees Celsius.

233. The method in accordance with any of claims 231-232, wherein dyes are added to the raw material mixture to acquire the colour of the end product.

234. The method in accordance with any of claims 231-233, wherein additives and/or plasticizers and/or dyes are used as additives suitable for enhancing extrusion.

235. The method in accordance with any of claims 231-234, wherein the water-resistant foam is a sealing, polystyrene, or other water-resistant foam.

236. The method in accordance with any of claims 231-235, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

237. The method in accordance with any of claims 231-236, wherein the recycled polyethylene is presented in the form of granules and/or powder and/or tapes.

238. The method in accordance with any of claims 231-237, wherein the product edges are welded or fused with sheet-like polymer plates.

239. The method in accordance with any of claims 231-238, wherein tanks for drinking water, products, or equipment are mounted in the access holes prior to sealing.

240. The method in accordance with any of claims 231-239, wherein treatment plants are mounted in the access holes for the treatment of wastewater and other flows,

241. The method in accordance with any of claims 231-240, wherein vertical holes are cut for mounting pipelines and electrical networks to provide access to the tanks in the upper section of the pontoon.

242. The method for manufacturing a pontoon unit of large size, according to which polymer raw materials are extruded, additives are added to polymer raw materials to enhance the extrusion, followed by vacuum stabilization and cooling; the product finished profile is pulled along the process line using haul-offs and the finished product is cut using longitudinal and/or cross-sectional saws into pieces of the required size and shape, the access holes are sealed, wherein the raw material is a waste processing product, namely, recycled polyethylene with initial polyethylene added, and the extrusion involves the extruder with several dies.

243. The method in accordance with claim 242, wherein the extrusion is carried out at a temperature of 100-250 degrees Celsius.

244. The method in accordance with any of claims 242-243, wherein dyes are added to the raw material mixture to acquire the colour of the end product.

245. The method in accordance with any of claims 242-244, wherein additives and/or plasticizers and/or dyes are used as additives suitable for enhancing extrusion.

246. The method in accordance with any of claims 242-245, wherein the water-resistant foam is a sealing, polystyrene, or other water-resistant foam.

247. The method in accordance with any of claims 242-246, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

248. The method in accordance with any of claims 242-247, wherein the recycled polyethylene is presented in the form of granules and/or powder and/or tapes.

249. The method in accordance with any of claims 242-248, wherein the product edges are welded or fused with sheet-like polymer plates of different thickness.

250. The method in accordance with any of claims 242-249, wherein tanks for drinking water, products, or equipment are mounted in the access holes prior to sealing.

251. The method in accordance with any of claims 242-250, wherein treatment plants are mounted in the access holes for the treatment of wastewater and other flows.

252. The method in accordance with any of claims 242-251, wherein vertical holes are cut for mounting pipelines and electrical networks to provide access to the tanks in the upper section of the pontoon.

253. The method for manufacturing a pontoon unit of a large size, according to which polymer raw materials are extruded, additives are added to polymer raw materials to enhance the extrusion, followed by vacuum stabilization and cooling; the product finished profile is pulled along the process line using haul-offs and the finished product is cut using longitudinal and/or cross-sectional saws into pieces of the required size and shape, the access holes are sealed, wherein the raw material is a waste processing product, namely, recycled polyethylene with initial polyethylene added, while the extrusion involves an extruder with several dies; at the same time, extruders are arranged in parallel in the process line and their number exceeds one.

254. The method in accordance with claim 253, wherein the extrusion is carried out at a temperature of 100-250 degrees Celsius.

255. The method in accordance with any of claims 253-254, wherein dyes are added to the raw material mixture to acquire the colour of the end product.

256. The method in accordance with any of claims 253-255, wherein additives and/or plasticizers and/or dyes are used as additives suitable for enhancing extrusion.

257. The method in accordance with any of claims 253-256, wherein the water-resistant foam is a sealing, polystyrene, or other water-resistant foam.

258. The method in accordance with any of claims 253-257, wherein the waste processing products are recycled grade HDPE polyethylene (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

259. The method in accordance with any of claims 253-258, wherein the recycled polyethylene is presented in the form of granules and/or powder and/or tapes.

260. The method in accordance with any of claims 253-259, wherein the product edges are welded or fused with sheet-like polymer plates of different thickness.

261. The method in accordance with any of claims 253-260, wherein tanks for drinking water, products, or equipment are mounted in the access holes prior to sealing.

262. The method in accordance with any of claims 253-261, wherein treatment plants are mounted in the access holes for the treatment of wastewater and other flows.

263. The method in accordance with any of claims 253-262, wherein vertical holes are cut for mounting pipelines and electrical networks to provide access to the tanks in the upper section of the pontoon.

264. The pontoon unit of a large size that comprises a product body, upper section and edges, while the pontoon unit is made of polymer raw materials-a waste processing product-recycled polyethylene with initial polyethylene added, **characterized by** being produced under claim 231.

265. The pontoon unit in accordance with claim 264 **characterized by** having the following shape of the bottom section: straight, semicircular or triangular, or the catamaran or trimaran configuration, with or without flanges.

266. The pontoon unit in accordance with any of claims 264-265, wherein access holes are present.

267. The pontoon unit in accordance with any of claims 264-266, wherein the product edges are welded or fused with sheet-like polymer plates.

268. The pontoon unit in accordance with any of claims 264-267, wherein tanks for drinking water, products, equipment are mounted in the access holes.

269. The pontoon unit in accordance with any of claims 264-268, wherein treatment plants are mounted in the access holes for the treatment of wastewater and other flows.

270. The pontoon unit in accordance with any of claims 264-269, wherein vertical holes are cut for mounting pipelines and electrical networks to provide access to the tanks in the upper section of the pontoon.

271. The pontoon unit of a large size that comprises a body, upper section and edges, while the pontoon unit is made of polymer raw materials-a waste processing product-recycled polyethylene with initial polyethylene added, **characterized by** being produced under claim 242.

272. The pontoon unit in accordance with claim 271 **characterized by** having the following shape of the bottom section: straight, semicircular or triangular, or the catamaran or trimaran configuration, with or without flanges.

273. The pontoon unit in accordance with any of claims 271-272, wherein access holes are present.

274. The pontoon unit in accordance with any of claims 271-273, wherein the product edges are welded or fused with sheet-like polymer plates.

275. The pontoon unit in accordance with any of claims 271-274, wherein tanks for drinking water, products, equipment are mounted in the access holes.

276. The pontoon unit in accordance with any of claims 271-275, wherein treatment plants are mounted in the access holes for the treatment of wastewater and other flows.

277. The pontoon unit in accordance with any of claims 271-276, wherein vertical holes are cut for mounting pipelines and electrical networks to provide access to the tanks in the upper section of the pontoon.

278. The pontoon unit of a large size that comprises a body, upper section and edges, while the pontoon unit is made of polymer raw materials-a waste processing product-recycled polyethylene with initial polyethylene added, **characterized by** being produced under claim 253.

279. The pontoon unit in accordance with claim 278 **characterized by** having the following shape of the bottom section: straight, semicircular or triangular, or the catamaran or trimaran configuration, with or without flanges.

280. The pontoon unit in accordance with any of claims 278-279, wherein access holes are present.

281. The pontoon unit in accordance with any of claims 278-280, wherein the product edges are welded or fused with sheet-like polymer plates.

282. The pontoon unit in accordance with any of claims 278-281, wherein tanks for drinking water, products, equipment are mounted in the access holes.

283. The pontoon unit in accordance with any of claims 278-282, wherein treatment plants are mounted in the access holes for the treatment of wastewater and other flows.

284. The pontoon unit in accordance with any of claims 287-283, wherein vertical holes are cut for mounting pipelines and electrical networks to provide access to the tanks in the upper section of the pontoon.

285. The method for manufacturing a pontoon unit of a large size, according to which the polymer raw material is extruded, while the raw material is a waste processing product, namely, recycled polyethylene, and the extrusion involves extruders that are interconnected with a single die, with the number of extruders exceeding one.

286. The method in accordance with claim 285, wherein the extrusion is carried out at a temperature of 100-300 degrees Celsius.

287. The method in accordance with any of claims 285-286, wherein dyes are added to the raw material mixture to acquire the colour of the end product.

288. The method in accordance with any of claims 285-287, wherein additives and/or plasticizers and/or dyes are used as additives suitable for enhancing extrusion.

289. The method in accordance with any of claims 285-288, wherein the water-resistant foam is a sealing, polystyrene, or other water-resistant foam.

290. The method in accordance with any of claims 285-289, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

291. The method in accordance with any of claims 285-290, wherein the recycled polyethylene is presented in the form of granules and/or powder and/or tapes.

292. The method in accordance with any of claims 285-291, wherein the product edges are welded or fused with sheet-like polymer plates of different thickness.

293. The method in accordance with any of claims 285-292, wherein tanks for drinking water, products, or equipment are mounted in the access holes prior to sealing.

294. The method in accordance with any of claims 285-293, wherein treatment plants are mounted in the access holes for the treatment of wastewater and other flows.

295. The method in accordance with any of claims 285-294, wherein vertical holes are cut for mounting pipelines and electrical networks to provide access to the tanks in the upper section of the pontoon.

296. The method for manufacturing a pontoon unit of a large size, according to which polymer raw materials are extruded, additives are added to polymer raw materials to enhance the extrusion, followed by vacuum stabilization and cooling; the product finished profile is pulled along the process line using haul-offs and the finished product is cut using longitudinal and/or cross-sectional saws into pieces of the required size and shape, the access holes are sealed, wherein the raw material is a waste processing product, namely, recycled polyethylene, and the extrusion involves the use of the extruders interconnected with a single die; at the same time, there are more than one extruders.

297. The method in accordance with claim 296, wherein the extrusion is carried out at a temperature of 100-300 degrees Celsius.

298. The method in accordance with any of claims 296-297, wherein dyes are added to the raw material mixture to acquire the colour of the end product.

299. The method in accordance with any of claims 296-298, wherein additives and/or plasticizers and/or dyes are used as additives suitable for enhancing extrusion.

300. The method in accordance with any of claims 296-299, wherein the water-resistant foam is a sealing, polystyrene, or other water-resistant foam.

301. The method in accordance with any of claims 296-300, wherein the waste processing product is a recycled polyethylene of the following grades: HDPE (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

302. The method in accordance with any of claims 296-301, wherein the recycled polyethylene is presented in the form of granules and/or powder and/or tapes.

303. The method in accordance with any of claims 296-302, wherein the product edges are welded or fused with sheet-like polymer plates of different thickness.

304. The method in accordance with any of claims 296-303, wherein tanks for drinking water, products, or equipment are mounted in the access holes prior to sealing.

305. The method in accordance with any of claims 296-304, wherein treatment plants are mounted in the access holes for the treatment of wastewater and other flows.

306. The method in accordance with any of claims 296-305, wherein vertical holes are cut for mounting pipelines and electrical networks to provide access to the tanks in the upper section of the pontoon.

307. The pontoon unit of a large size that comprises a body, upper section and edges, while the pontoon unit is made of polymer raw materials-a waste processing product-recycled polyethylene, **characterized by** being produced under claim 285.

308. The pontoon unit in accordance with claim 307 **characterized by** having the following shape of the bottom section: straight, semicircular or triangular, or the catamaran or trimaran configuration, with or without flanges.

309. The pontoon unit in accordance with any of claims 307-308, wherein access holes are present.

310. The pontoon unit in accordance with any of claims 307-309, wherein the product edges are welded or fused with sheet-like polymer plates.

311. The pontoon unit in accordance with any of claims 307-310, wherein tanks for drinking water, products, equipment are mounted in the access holes.

312. The pontoon unit in accordance with any of claims 307-311, wherein treatment plants are mounted in the access holes for the treatment of wastewater and other flows.

313. The pontoon unit in accordance with any of claims 307-312, wherein vertical holes are cut for mounting pipelines and electrical networks to provide access to the tanks in the upper section of the pontoon.

314. The pontoon unit of a large size that comprises a body, upper section and edges, while the pontoon unit is made of polymer raw materials-a waste processing product-recycled polyethylene, **characterized by** being produced under claim 296.

315. The pontoon unit in accordance with claim 314 **characterized by** having the following shape of the bottom section: straight, semicircular or triangular, or the catamaran or trimaran configuration, with or without flanges.

316. The pontoon unit in accordance with any of claims 314-315, wherein access holes are present.

317. The pontoon unit in accordance with any of claims 314-316, wherein the product edges are welded or fused with sheet-like polymer plates.

318. The pontoon unit in accordance with any of claims 314-317, wherein tanks for drinking water, products, equipment are mounted in the access holes.

319. The pontoon unit in accordance with any of claims 314-318, wherein treatment plants are mounted in the access holes for the treatment of wastewater and other flows.

320. The pontoon unit in accordance with any of claims 314-319, wherein vertical holes are cut for mounting pipelines and electrical networks to provide access to the tanks in the upper section of the pontoon.

321. The method for manufacturing a pontoon unit of a large size, according to which the polymer raw material is extruded, while the raw material is a waste processing product, namely, recycled polyethylene with initial polyethylene added, and the extrusion involves extruders that are interconnected with a single die, with the number of extruders exceeding one.

322. The method in accordance with claim 321, **characterized by** the extrusion carried out at a temperature of 100-250 degrees Celsius.

323. The method in accordance with any of claims 321-322, wherein dyes are added to the raw material mixture to acquire the colour of the end product.

324. The method in accordance with any of claims 321-333, wherein additives and/or plasticizers and/or dyes are used as additives suitable for enhancing extrusion.

325. The method in accordance with any of claims 321-334, wherein the water-resistant foam is a sealing, polystyrene, or other water-resistant foam.

326. The method in accordance with any of claims 321-325, wherein the waste processing products are recycled grade HDPE polyethylene (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

327. The method in accordance with any of claims 321-326, wherein the recycled polyethylene is presented in the form of granules and/or powder and/or tapes.

328. The method in accordance with any of claims 321-327, wherein the product edges are welded or fused with sheet-like polymer plates of different thickness.

329. The method in accordance with any of claims 321-328, wherein tanks for drinking water, products, equipment are mounted in the access holes before sealing.

330. The method in accordance with any of claims 321-329, wherein treatment plants are mounted in the access holes for the treatment of wastewater and other flows.

331. The method in accordance with any of claims 321-330, wherein vertical holes are cut for mounting pipelines and electrical networks to provide access to the tanks in the upper section of the pontoon.

332. The method for manufacturing a pontoon unit of a large size, according to which polymer raw materials are extruded, additives are added to polymer raw materials to enhance the extrusion, followed by vacuum stabilization and cooling; the product finished profile is pulled along the process line using haul-offs and the finished product is cut using longitudinal and/or cross-sectional saws into pieces of the required size and shape, the access holes are sealed, wherein the raw material is a waste processing product, namely, recycled polyethylene with initial polyethylene added, and the extrusion involves the use of the extruders interconnected with a single die; at the same time, the number of extruders exceeds one.

333. The method in accordance with claim 332, wherein the extrusion is carried out at a temperature of 100-250 degrees Celsius.

334. The method in accordance with any of claims 332-333, wherein dyes are added to the raw material mixture to acquire the colour of the end product.

335. The method in accordance with any of claims 332-334, wherein additives and/or plasticizers and/or dyes are used as additives suitable for enhancing extrusion.

336. The method in accordance with any of claims 332-335, wherein the water-resistant foam is a sealing, polystyrene, or other water-resistant foam.

337. The method in accordance with any of claims 332-336, wherein the waste processing products are recycled grade HDPE polyethylene (recycled high-density polyethylene) and/or MDPE (recycled medium-density polyethylene) and/or LDPE (recycled low-density polyethylene), and/or LLDPE (linear low density polyethylene), and/or PEX (cross linked polyethylene), and/or PP (polypropylene), and/or CSPE (chlorosulfonated polyethylene), and/or UHMWPE (ultra-high molecular weight polyethylene), and/or their mixtures.

338. The method in accordance with any of claims 332-337, wherein the recycled polyethylene is presented in the form of granules and/or powder and/or tapes.

339. The method in accordance with any of claims 332-338, wherein the product edges are welded or fused with sheet polymer plates of different thickness.

340. The method in accordance with any of claims 332-339, wherein containers for drinking water, products, equipment are mounted in the access holes before sealing.

341. The method in accordance with any of claims 332-340, wherein treatment plants are mounted in the access holes for the treatment of wastewater and other flows.

342. The method in accordance with any of claims 332-341, wherein to provide access to the tanks in the upper section of the pontoon, vertical holes are cut for mounting pipelines and electrical networks.

343. The pontoon unit of a large size that comprises a body, upper section and edges, while the pontoon unit is made of polymer raw materials-a waste processing product-recycled polyethylene with initial polyethylene added, **characterized by** being produced under claim 321.

344. The pontoon unit in accordance with claim 343 **characterized by** having the following shape of the bottom section: straight, semicircular or triangular, or the catamaran or trimaran configuration, with or without flanges.

345. The pontoon unit in accordance with any of claims 343-344, wherein access holes are present.

346. The pontoon unit in accordance with any of claims 343-345, wherein the product edges are welded or fused with sheet polymer plates.

347. The pontoon unit in accordance with any of claims 343-346, wherein tanks for drinking water, products, equipment are mounted in the access holes.

348. The pontoon unit in accordance with any of claims 344-347, wherein treatment plants are mounted in the access holes for the treatment of wastewater and other flows.

349. The pontoon unit in accordance with any of claims 344-348, wherein vertical holes are cut for mounting pipelines and electrical networks to provide access to the tanks in the upper section of the pontoon.

350. The pontoon unit of a large size that comprises a body, upper section and edges, while the pontoon unit is made of polymer raw materials-a waste processing product-recycled polyethylene with initial polyethylene added, **characterized by** being produced under claim 332.

351. The pontoon unit in accordance with claim 350 **characterized by** having the following shape of the bottom section: straight, semicircular or triangular, or the catamaran or trimaran configuration, with or without flanges.

352. The pontoon unit in accordance with any of claims 350-351, wherein access holes are present.

353. The pontoon unit in accordance with any of claims 350-352, wherein the product edges are welded or fused with sheet polymer plates.

354. The pontoon unit in accordance with any of claims 350-353, wherein tanks for drinking water, products, equipment are mounted in the access holes.

355. The pontoon unit in accordance with any of claims 350-355, wherein treatment plants are mounted in the access holes for the treatment of wastewater and other flows.

356. The pontoon unit in accordance with any of claims 350-355, wherein vertical holes are cut for mounting pipelines and electrical networks to provide access to the tanks in the upper section of the pontoon.
